(19) Europäisches Patentamt / European Patent Office / Office européen des brevets

(11) **EP 4 395 210 A1**

(12) **EUROPEAN PATENT APPLICATION**
published in accordance with Art. 153(4) EPC

(43) Date of publication:
03.07.2024 Bulletin 2024/27

(21) Application number: 22871842.5

(22) Date of filing: 13.09.2022

(51) International Patent Classification (IPC):
*H04L 1/18* (2023.01)  *H04L 5/00* (2006.01)
*H04W 72/04* (2023.01)

(52) Cooperative Patent Classification (CPC):
H04L 1/18; H04L 5/00; H04W 72/04

(86) International application number:
PCT/CN2022/118359

(87) International publication number:
WO 2023/045794 (30.03.2023 Gazette 2023/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 24.09.2021 CN 202111119648

(71) Applicant: SHANGHAI LANGBO
COMMUNICATION TECHNOLOGY
COMPANY LIMITED
Shanghai 200240 (CN)

(72) Inventors:
• HU, Yang
Shanghai 201206 (CN)
• ZHANG, Xiaobo
Shanghai 201206 (CN)

(74) Representative: Zhang, Fan
Am Quälenberg 3A
38124 Braunschweig (DE)

(54) **METHOD AND APPARATUS FOR USE IN NODE FOR WIRELESS COMMUNICATION**

(57) The present application discloses a method and apparatus for use in a node for wireless communication. The method comprises: a first receiver receives a target PDSCH and first signaling; and a first transmitter sends a first PUSCH in a first air interface resource pool, wherein the first signaling is used to determine the first air interface resource pool, a HARQ process corresponding to the target PDSCH is one among a first-type HARQ process or a second-type HARQ process, the first-type HARQ process is different from the second-type HARQ process, the first signaling comprises a first domain, and the value of the first domain in the first signaling and the HARQ process corresponding to the target PDSCH are both used to determine whether the first air interface resource pool is used for sending HARQ-ACK bits.

100

First node

Receiving target PDSCH and
first signaling — 101

Transmitting first PUSCH in
first radio resource pool — 102

FIG. 1

EP 4 395 210 A1

**Description**

**TECHNICAL FIELD**

The present application relates to transmission methods and devices in wireless communication systems, and in particular to a transmission method and device of a radio signal in a wireless communication system supporting non-terrestrial networks or cellular networks.

**BACKGROUND**

HARQ-ACK (Hybrid Automatic Repeat reQuest ACKnowledgement) feedback is a key technology in wireless communications; 3GPP (3rd Generation Partner Project) has made enhancements to HARQ-ACK feedback in its discussions on a number of topics for technical specifications of NR Release 17 version.

**SUMMARY**

A. In the discussion on the topic of non-terrestrial networks (NTN), 3GPP has agreed to support the function to configure HARQ-ACK feedback enabling/disabling; after the introduction of the above configuration, how to perform the multiplexing of HARQ-ACK bits in a PUSCH is a key issue that must be addressed.

The present application discloses a solution to the above problem. It should be noted that while the above description uses NTN as an example, the present application is equally applicable to other scenarios, such as, terrestrial networks, Internet of Vehicles (IoV), Internet of Things (IoT), etc., with similar technical results. In addition, the adoption of a unified solution for different scenarios (including, but not limited to, NTN, terrestrial networks, IoV, and IoT) can also help to reduce hardware complexity and cost, or improve performance. If no conflict is incurred, embodiments in any node in the present application and the characteristics of the embodiments are also applicable to any other node, and vice versa. And the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:

receiving a target PDSCH and a first signaling; and
transmitting a first PUSCH in a first radio resource pool;
herein, the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

In one embodiment, a problem to be solved in the present application comprises: how to determine whether to multiplex a HARQ-ACK bit into the PUSCH for transmission based on a value of a UL (UpLink) DAI (Downlink Assignment Index) and a type of a HARQ process.

In one embodiment, a problem to be solved in the present application comprises: when the first node is configured to use a semi-static HARQ-ACK codebook and a HARQ-ACK bit to be fed back are only for an SPS PDSCH, or, a PDSCH scheduled by DCI format 1_0 with a value of a counter DAI field being 1 on a primary cell (PCell), how to determine whether to multiplex a HARQ-ACK bit into the PUSCH for transmission based on a value of a UL DAI and a corresponding type of HARQ process.

In one embodiment, advantages of the above method comprise: determining whether to multiplex a HARQ-ACK bit into the first PUSCH based on an indication of the first field in the first signaling and a type of a HARQ process corresponding to the target PDSCH both ensures the flexibility in base station control and avoids unnecessary HARQ-ACK feedback overhead for the HARQ process of HARQ-ACK feedback disabling.

In one embodiment, advantages of the above method comprise: enhancing the transmission performance of uplink.

In one embodiment, advantages of the above method comprise: well matching the large delay characteristics of NTN.

According to one aspect of the present application, the above method is characterized in that the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first node does not transmit a HARQ-ACK bit in the first radio resource pool.

According to one aspect of the present application, the above method is characterized in that when the value of the first field in the first signaling is equal to 1 and the HARQ process corresponding to the target PDSCH is a HARQ process of the second type: the first radio resource pool is used to transmit at least one HARQ-ACK bit, and any HARQ-ACK bit in the at least one HARQ-ACK bit represents a NACK.

According to one aspect of the present application, the above method is characterized in that when the value of the first field in the first signaling is equal to 1: the first radio resource pool is used to transmit at least one HARQ-ACK bit, and the at least one HARQ-ACK bit comprises a HARQ-ACK bit for the target PDSCH.

According to one aspect of the present application, the above method is characterized in that when the HARQ process corresponding to the target PDSCH is a HARQ process of the first type: the first radio resource pool is used to transmit at least one HARQ-ACK bit, and the at least one HARQ-ACK bit comprises a HARQ-ACK bit for the target PDSCH.

According to one aspect of the present application, the above method is characterized in that a HARQ process of the first type is a HARQ process with enabled HARQ feedback, and a HARQ process of the second type is a HARQ process with disabled HARQ feedback.

According to one aspect of the present application, the above method is characterized in that a first PUCCH resource is associated with the target PDSCH, and the first PUCCH resource overlaps with resources occupied by the first PUSCH in time domain.

In one embodiment, the above method is particularly applicable to the scenario where PUCCH resources associated to the target PDSCH overlap in time domain with resources occupied by the first PUSCH and where timeline conditions for HARQ-ACK bit multiplexing are satisfied.

The present application provides a method in a second node for wireless communications, comprising:

transmitting a target PDSCH and a first signaling; and
receiving a first PUSCH in a first radio resource pool;
herein, the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

According to one aspect of the present application, the above method is characterized in that the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first radio resource pool is not used to transmit a HARQ-ACK bit.

According to one aspect of the present application, the above method is characterized in that when the value of the first field in the first signaling is equal to 1 and the HARQ process corresponding to the target PDSCH is a HARQ process of the second type: the first radio resource pool is used to transmit at least one HARQ-ACK bit, and any HARQ-ACK bit in the at least one HARQ-ACK bit represents a NACK.

According to one aspect of the present application, the above method is characterized in that when the value of the first field in the first signaling is equal to 1: the first radio resource pool is used to transmit at least one HARQ-ACK bit, and the at least one HARQ-ACK bit comprises a HARQ-ACK bit for the target PDSCH.

According to one aspect of the present application, the above method is characterized in that when the HARQ process corresponding to the target PDSCH is a HARQ process of the first type: the first radio resource pool is used to transmit at least one HARQ-ACK bit, and the at least one HARQ-ACK bit comprises a HARQ-ACK bit for the target PDSCH.

According to one aspect of the present application, the above method is characterized in that a HARQ process of the first type is a HARQ process with enabled HARQ feedback, and a HARQ process of the second type is a HARQ process with disabled HARQ feedback.

According to one aspect of the present application, the above method is characterized in that a first PUCCH resource is associated with the target PDSCH, and the first PUCCH resource overlaps with resources occupied by the first PUSCH in time domain.

The present application provides a first node for wireless communications, comprising:

a first receiver, receiving a target PDSCH and a first signaling; and
a first transmitter, transmitting a first PUSCH in a first radio resource pool;
herein, the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

The present application provides a second node for wireless communications, comprising:

a second transmitter, transmitting a target PDSCH and a first signaling; and
a second receiver, receiving a first PUSCH in a first radio resource pool;
herein, the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

The present application provides a method in a first node for wireless communications, comprising:

receiving a first signaling, the first signaling comprising a first field; and
transmitting a first PUSCH;
herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion.

In one embodiment, a problem to be solved in the present application comprises: how to reduce the overhead of HARQ-ACK feedback.

In one embodiment, a problem to be solved in the present application comprises: how to improve the transmission performance of PUSCH.

In one embodiment, a problem to be solved in the present application comprises: how to determine whether the first PUSCH carries HARQ-ACK information.

In one embodiment, a problem to be solved in the present application comprises: how to determine whether to multiplex a HARQ-ACK bit into the PUSCH for transmission based on a value of a UL (UpLink) DAI (Downlink Assignment Index) and a type of a HARQ process.

In one embodiment, a problem to be solved in the present application comprises: how to determine whether a PUSCH carries HARQ-ACK information based on whether HARQ-ACK information associated with a received PDSCH is disabled or not.

In one embodiment, advantages of the above method comprise: reducing the overhead of HARQ-ACK feedback.

In one embodiment, advantages of the above method comprise: improving the transmission performance of PUSCH.

In one embodiment, advantages of the above method comprise: improving the flexibility in base station scheduling.

In one embodiment, the expression that a PDSCH reception of the first type is a PDSCH reception other than a PDSCH reception associated with disabled HARQ-ACK information comprises: a PDSCH reception of the first type is a PDSCH reception associated to enabled HARQ-ACK information.

In one embodiment, for a PDSCH reception associated to disabled HARQ-ACK information, the first node does not generate HARQ-ACK information.

In one embodiment, for a PDSCH reception associated to disabled HARQ-ACK information, the first node does not report HARQ-ACK information.

In one embodiment, for a PDSCH reception associated to disabled HARQ-ACK information, the first node does not provide HARQ-ACK information.

In one embodiment, for a PDSCH reception associated to enabled HARQ-ACK information, the first node generates HARQ-ACK information.

In one embodiment, for a PDSCH reception associated to enabled HARQ-ACK information, the first node reports HARQ-ACK information.

In one embodiment, for a PDSCH reception associated to enabled HARQ-ACK information, the first node provides HARQ-ACK information.

In one embodiment, a DCI format scheduling a PDSCH reception only provides a TB of a HARQ process associated with disabled HARQ-ACK information is not a DCI format of the first type.

In one embodiment, whether a HARQ process is associated with disabled HARQ-ACK information is configurable.

In one embodiment, whether a HARQ process is associated with disabled HARQ-ACK information is configured by an RRC signaling.

In one embodiment, the expression that a PDSCH reception of the first type is a PDSCH reception other than a PDSCH reception that only provides a Transport Block (TB) for a HARQ process associated with disabled HARQ-ACK information comprises: a PDSCH reception of the first type is a PDSCH reception that provides at least one TB for a HARQ process associated with enabled HARQ-ACK information.

In one embodiment, the expression that a DCI format of the first type is a DCI format that schedules PDSCH reception(s) of a first type, or a DCI format that has associated HARQ-ACK information and does not schedule a PDSCH reception comprises: a DCI format of the first type is a DCI format that schedules a PDSCH reception of the first type on any serving cell, or that has associated HARQ-ACK information and does not schedule a PDSCH reception on any serving cell.

In one embodiment, the expression that a DCI format of the first type is a DCI format that schedules PDSCH reception(s) of a first type, or a DCI format that has associated HARQ-ACK information and does not schedule a PDSCH reception comprises: a DCI format of the first type is a DCI format that schedules a PDSCH reception of the first type on any serving cell, or that has associated HARQ-ACK information and does not schedule a PDSCH reception.

In one embodiment, the expression that a DCI format of the first type is a DCI format that schedules PDSCH reception(s) of a first type, or a DCI format that has associated HARQ-ACK information and does not schedule a PDSCH reception comprises: a DCI format of the first type is a DCI format that schedules a PDSCH reception of the first type, or that has associated HARQ-ACK information and does not schedule a PDSCH reception on any serving cell.

In one embodiment, the expression that a DCI format of the first type is a DCI format that schedules PDSCH reception(s) of a first type, or a DCI format that has associated HARQ-ACK information and does not schedule a PDSCH reception comprises: a DCI format of the first type is a DCI format that schedules a PDSCH reception of the first type, or that has associated HARQ-ACK information and does not schedule a PDSCH reception on any serving cell.

In one embodiment, the target monitoring occasion set is: at least one monitoring occasion on any serving cell.

In one embodiment, when HARQ-ACK information is multiplexed in the first PUSCH, the first PUSCH carries HARQ-ACK information.

In one embodiment, when HARQ-ACK information is not multiplexed in the first PUSCH, the first PUSCH does not carry HARQ-ACK information.

In one embodiment, the first field comprises 2 bits, and a value of the first field is equal to one of 1,2,3,4.

In one embodiment, the meaning of the expression of transmitting a first PUSCH comprises: transmitting a signal in the first PUSCH.

In one embodiment, the meaning of the expression of transmitting a first PUSCH comprises: when the first PUSCH carries HARQ-ACK information, the HARQ-ACK information is multiplexed in the first PUSCH and then is transmitted.

In one embodiment, the meaning of the expression of transmitting a first PUSCH comprises: transmitting at least a first bit block in the first PUSCH, and the first bit block comprising at least one bit.

In one embodiment, the first bit block in the present application comprises a Transport Block (TB).

In one embodiment, the first bit block in this application comprises at least one Code Block (CB).

In one embodiment, the first bit block in this application comprises at least one Code Block Group (CBG).

In one embodiment, the first bit block in the present application comprises a Channel state information (CSI) bit.

In one embodiment, the first bit block in the present application is transmitted in the first PUSCH after being subjected to at least part of CRC attachment, Code block segmentation, Code block CRC attachment, Channel coding, Rate matching, Code block concatenation, Scrambling, Modulation, Spreading, Layer Mapping, Transform precoding, Precoding, mapping to physical resources, multicarrier symbol generation, modulation and upconversion.

In one embodiment, the PDSCH reception in the present application is specific to the first node.

According to one aspect of the present application, the above method is characterized in that when the value of the first field in the first signaling is not equal to 4, or when the first node receives a PDCCH for a DCI format of the first type in the target monitoring occasion set, or when the first node has HARQ-ACK information received in response to an SPS PDSCH to be multiplexed in the first PUSCH, the first PUSCH carries HARQ-ACK information.

According to one aspect of the present application, the above method is characterized in that whether the first PUSCH carries HARQ-ACK information is related to whether the first node receives a PDCCH for a DCI format of the first type in the target monitoring occasion set.

According to one aspect of the present application, the above method is characterized in that the expression that a PDSCH reception of the first type is a PDSCH reception other than a PDSCH reception associated with disabled HARQ-ACK information comprises: a PDSCH reception of the first type is a PDSCH reception other than a PDSCH reception that only provides TB(s) for a HARQ process associated with disabled HARQ-ACK information.

According to one aspect of the present application, the above method is characterized in that the first field is a Downlink Assignment Index (DAI) field.

The present application provides a method in a second node for wireless communications, comprising:

transmitting a first signaling, the first signaling comprising a first field; and
receiving a first PUSCH;
herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion.

According to one aspect of the present application, the above method is characterized in that when the value of the first field in the first signaling is not equal to 4, or when the first node receives a PDCCH for a DCI format of the first type in the target monitoring occasion set, or when the first node has HARQ-ACK information received in response to an SPS PDSCH to be multiplexed in the first PUSCH, the first PUSCH carries HARQ-ACK information.

According to one aspect of the present application, the above method is characterized in that whether the first PUSCH carries HARQ-ACK information is related to whether the first node receives a PDCCH for a DCI format of the first type in the target monitoring occasion set.

According to one aspect of the present application, the above method is characterized in that the expression that a PDSCH reception of the first type is a PDSCH reception other than a PDSCH reception associated with disabled HARQ-ACK information comprises: a PDSCH reception of the first type is a PDSCH reception other than a PDSCH reception that only provides TB(s) for a HARQ process associated with disabled HARQ-ACK information.

According to one aspect of the present application, the above method is characterized in that the first field is a Downlink Assignment Index (DAI) field.

The present application provides a first node for wireless communications, comprising:

a first receiver, receiving a first signaling, the first signaling comprising a first field; and
a first transmitter, transmitting a first PUSCH;
herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion.

According to one aspect of the present application, the above device is characterized in that

when the value of the first field in the first signaling is not equal to 4, or when the first node receives a PDCCH for a DCI format of the first type in the target monitoring occasion set, or when the first node has HARQ-ACK information received in response to an SPS PDSCH to be multiplexed in the first PUSCH, the first PUSCH carries HARQ-ACK information.

According to one aspect of the present application, the above device is characterized in that whether the first PUSCH carries HARQ-ACK information is related to whether the first node receives a PDCCH for a DCI format of the first type in the target monitoring occasion set.

According to one aspect of the present application, the above device is characterized in that the expression that a PDSCH reception of the first type is a PDSCH reception other than a PDSCH reception associated with disabled HARQ-ACK information comprises: a PDSCH reception of the first type is a PDSCH reception other than a PDSCH reception that only provides TB(s) for a HARQ process associated with disabled HARQ-ACK information.

According to one aspect of the present application, the above device is characterized in that the first field is a Downlink Assignment Index (DAI) field.

The present application provides a second node for wireless communications, comprising:

a second transmitter, transmitting a first signaling, the first signaling comprising a first field; and
a second receiver, receiving a first PUSCH;
herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion.

In one embodiment, the method in the present application is advantageous in the following aspects:

- . ensuring the flexibility in base station control and scheduling;
- . avoiding unnecessary HARQ-ACK feedback overhead;
- . enhancing the transmission performance of uplink;
- . being conducive to matching large delay characteristics of NTN;
- . the amount of work required for standardization being small.

B. 3GPP agreed at its 106-th meeting to support separate HARQ-ACK codebook type configurations for MBS (Multicast and Broadcast Services) and unicast services; how to perform the multiplexing of HARQ-ACK bits of MBS and unicast services in PUSCH is a key issue that must be addressed.

To address the above problem, the present application provides a solution. It should be noted that while the above description uses HARQ-ACK in uplink as an example, the present application is equally applicable to other scenarios, e.g., downlink, sidelink, etc., so as to achieve similar technical results. In addition, the adoption of a unified solution for different scenarios (including, but not limited to, uplink, downlink, and sidelink) can also help reduce hardware complexity and cost, or improve performance. If no conflict is incurred, embodiments in any node in the present application and the characteristics of the embodiments are also applicable to any other node, and vice versa. And the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:

receiving a target PDSCH and a first signaling; and
transmitting a first PUSCH in a first radio resource pool;
herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, the first node aborts transmitting a HARQ-ACK bit for the target PDSCH in the first radio resource pool.

In one embodiment, a problem to be solved in the present application comprises: how to perform the multiplexing of HARQ-ACK bits in the PUSCH when the UE is configured to respectively use different types of HARQ-ACK codebooks for MBS and unicast services.

In one embodiment, a problem to be solved in the present application comprises: how to perform the multiplexing of HARQ-ACK bits in a PUSCH when the UE is configured to use semi-static HARQ-ACK codebooks for both MBS and unicast services.

In one embodiment, advantages of the above method comprise: ensuring the flexibility of the base station control.

In one embodiment, advantages of the above method comprise: reducing the impact on PUSCH transmission of inconsistent understanding of a number of HARQ-ACK bits between the communication parties due to DCI miss-detection.

In one embodiment, advantages of the above method comprise: enhancing the transmission performance of uplink.

According to one aspect of the present application, the above method is characterized in that the first signaling comprises a second field, and the second field comprises 1 bit; the first condition is: a value of the second field in the first signaling is equal to 0.

In one embodiment, characteristics of the above method comprise: the first signaling comprises two UL DAI fields, and values of the two UL DAI fields in the first signaling are both used to determine whether to transmit HARQ-ACK bits for the target PDSCH in the first PUSCH.

According to one aspect of the present application, the above method is characterized in that the first condition is: the first radio resource pool is not used to transmit a Type-2 HARQ-ACK codebook.

In one embodiment, characteristics of the above method comprise: determining whether to transmit HARQ-ACK bits for the target PDSCH in the first PUSCH based on a value of a UL DAI and whether a Type-2 HARQ-ACK codebook is multiplexed in the first PUSCH.

According to one aspect of the present application, the above method is characterized in that when the first radio resource pool is used to transmit a HARQ-ACK bit for the target PDSCH, a HARQ-ACK bit for the target PDSCH belongs to a Type-1 HARQ-ACK codebook.

According to one aspect of the present application, the above method is characterized in that when the value of the first field in the first signaling is equal to 0 and the first condition is met: a number of HARQ-ACK bit(s) transmitted in the first radio resource pool is equal to 1; when the value of the first field in the first signaling is equal to 1: a number of HARQ-ACK bit(s) transmitted in the first radio resource pool is greater than 1.

According to one aspect of the present application, the above method is characterized in that a first PUCCH is associated with the target PDSCH, and there exists an overlapping between the first PUCCH and the first PUSCH in time domain.

In one embodiment, the above method is particularly applicable to scenarios where PUCCH resources associated to the target PDSCH overlap in time domain with resources occupied by the first PUSCH and where timeline conditions for HARQ-ACK bit multiplexing are satisfied.

The present application provides a method in a second node for wireless communications, comprising:

transmitting a target PDSCH and a first signaling; and
receiving a first PUSCH in a first radio resource pool;
herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, the first radio resource pool is not used to transmit a HARQ-ACK bit for the target PDSCH.

According to one aspect of the present application, the above method is characterized in that the first signaling comprises a second field, and the second field comprises 1 bit; the first condition is: a value of the second field in the first signaling is equal to 0.

According to one aspect of the present application, the above method is characterized in that

the first condition is: the first radio resource pool is not used to transmit a Type-2 HARQ-ACK codebook.

According to one aspect of the present application, the above method is characterized in that when the first radio resource pool is used to transmit a HARQ-ACK bit for the target PDSCH, a HARQ-ACK bit for the target PDSCH belongs to a Type-1 HARQ-ACK codebook.

According to one aspect of the present application, the above method is characterized in that when the value of the first field in the first signaling is equal to 0 and the first condition is met: a number of HARQ-ACK bit(s) transmitted in the first radio resource pool is equal to 1; when the value of the first field in the first signaling is equal to 1: a number of HARQ-ACK bit(s) transmitted in the first radio resource pool is greater than 1.

According to one aspect of the present application, the above method is characterized in that a first PUCCH is associated with the target PDSCH, and there exists an overlapping between the first PUCCH and the first PUSCH in time domain.

The present application provides a first node for wireless communications, comprising:

a first receiver, receiving a target PDSCH and a first signaling; and
a first transmitter, transmitting a first PUSCH in a first radio resource pool;
herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, the first node aborts transmitting a HARQ-ACK bit for the target PDSCH in the first radio resource pool.

The present application provides a second node for wireless communications, comprising:

a second transmitter, transmitting a target PDSCH and a first signaling; and
a second receiver, receiving a first PUSCH in a first radio resource pool;
herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, the first radio resource pool is not used to transmit a HARQ-ACK bit for the target PDSCH.

In one embodiment, the method in the present application is advantageous in the following aspects:

- . ensuring the flexibility in base station control and scheduling;
- . being conducive to making full use of the reserved resource elements for potential HARQ-ACK transmission to reduce the impact on PUSCH transmission of the inconsistent understanding of a number of HARQ-ACK bits between the both sides of the communications incurred by DCI miss-detection;
- . enhancing the transmission performance of uplink.

3GPP has agreed to introduce a HARQ-ACK feedback mode of NACK-only feedback for MBS, where the UE may be configured to use multiple PUCCH resource sets (or, PUCCH resources) with different HARQ-ACK feedback modes; how to determine which feedback mode (NACK-only feedback or ACK/NACK feedback) is used by the PUCCH used to carry HARQ-ACK bits is a key issue that must be addressed.

To address the above problem, the present application provides a solution. It should be noted that while the above description uses HARQ-ACK in uplink as an example, the present application is equally applicable to other scenarios, e.g., downlink, sidelink, etc., so as to achieve similar technical results. In addition, the adoption of a unified solution for different scenarios (including, but not limited to, uplink, downlink, and sidelink) can also help reduce hardware complexity and cost, or improve performance. If no conflict is incurred, embodiments in any node in the present application and the characteristics of the embodiments are also applicable to any other node, and vice versa. And the embodiments in the present application and the characteristics in the embodiments can be arbitrarily combined if there is no conflict.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

The present application provides a method in a first node for wireless communications, comprising:

receiving a first information group and a first DCI; and

transmitting a first bit block in a target PUCCH, the first bit block comprising at least one HARQ-ACK bit;

herein, resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

In one embodiment, characteristics of the above method comprise: different PUCCH resource sets are configured for different HARQ-ACK feedback modes, and the first DCI is used to determine a target PUCCH resource set from the different PUCCH resource sets configured with different HARQ-ACK feedback modes, as well as to determine the target PUCCH resource from the target PUCCH resource set.

In one embodiment, advantages of the above method comprise: supporting the simultaneous configuration of multiple PUCCH resource sets using different HARQ-ACK feedback modes to the UE, which enhances the flexibility of base station scheduling and control.

According to one aspect of the present application, the above method is characterized in that the first DCI comprises a first field, the first field in the first DCI is used to determine the target PUCCH resource set from the multiple PUCCH resource sets, and is also used to determine the target PUCCH resource from the target PUCCH resource set.

In one embodiment, characteristics of the above method comprise: in legacy scenarios, a PUCCH resource indicator field in a DCI format is only used to indicate PUCCH resources from a PUCCH resource set; unlike the conventional solution, in the above method disclosed in the present application, a PUCCH resource indicator field (i.e., the first field) in the first DCI is used to determine both the target PUCCH resource set from the multiple PUCCH resource sets and the target PUCCH resource from the target PUCCH resource set.

According to one aspect of the present application, the above method is characterized in that the first DCI comprises a second field and a third field, the second field in the first DCI is used to determine the target PUCCH resource set from the multiple PUCCH resource sets, and the third field in the first DCI is used to determine the target PUCCH resource from the target PUCCH resource set.

In one embodiment, characteristics of the above method comprise: in legacy scenarios, a PUCCH resource indicator field in a DCI format is only used to indicate PUCCH resources from a PUCCH resource set; unlike the conventional solution, in the above method disclosed in the present application, there exist two fields in the first DCI being respectively used to determine the target PUCCH resource set and the target PUCCH resource in the target PUCCH resource set.

According to one aspect of the present application, the above method is characterized in that there exist two PUCCH resource sets in the multiple PUCCH resource sets respectively corresponding to different HARQ-ACK feedback modes, and the different HARQ-ACK feedback modes comprise: NACK-only feedback and ACK/NACK feedback.

In one embodiment, the PUCCH for ACK/NACK feedback refers to PUCCH that is not only for NACK feedback.

The present application provides a method in a second node for wireless communications, comprising:

transmitting a first information group and a first DCI; and

receiving a first bit block in a target PUCCH, the first bit block comprising at least one HARQ-ACK bit;

herein, resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

According to one aspect of the present application, the above method is characterized in that the first DCI comprises a first field, the first field in the first DCI is used to determine the target PUCCH resource set from the multiple PUCCH resource sets, and is also used to determine the target PUCCH resource from the target PUCCH resource set.

According to one aspect of the present application, the above method is characterized in that the first DCI comprises a second field and a third field, the second field in the first DCI is used to determine the target PUCCH resource set from the multiple PUCCH resource sets, and the third field in the first DCI is used to determine the target PUCCH resource from the target PUCCH resource set.

According to one aspect of the present application, the above method is characterized in that there exist two PUCCH resource sets in the multiple PUCCH resource sets respectively corresponding to different HARQ-ACK feedback modes, and the different HARQ-ACK feedback modes comprise: NACK-only feedback and ACK/NACK feedback.

The present application provides a first node for wireless communications, comprising:

a first receiver, receiving a first information group and a first DCI; and
a first transmitter, transmitting a first bit block in a target PUCCH, the first bit block comprising at least one HARQ-ACK bit;
herein, resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

The present application provides a second node for wireless communications, comprising:

a second transmitter, transmitting a first information group and a first DCI; and
a second receiver, receiving a first bit block in a target PUCCH, the first bit block comprising at least one HARQ-ACK bit;
herein, resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

**BRIEF DESCRIPTION OF THE DRAWINGS**

Other features, objects and advantages of the present application will become more apparent from the detailed description of non-restrictive embodiments taken in conjunction with the following drawings:

FIG. 1 illustrates a flowchart of the processing of a first node according to one embodiment of the present application;
FIG. 2 illustrates a schematic diagram of a network architecture according to one embodiment of the present application;
FIG. 3 illustrates a schematic diagram of a radio protocol architecture of a user plane and a control plane according to one embodiment of the present application;
FIG. 4 illustrates a schematic diagram of a first communication device and a second communication device according to one embodiment of the present application;
FIG. 5 illustrates a flowchart of signal transmission according to one embodiment of the present application;
FIG. 6 illustrates a schematic diagram of a value of a first field in a first signaling and a HARQ process corresponding to a target PDSCH being used to determine whether a first radio resource pool is used to transmit a HARQ-ACK bit according to one embodiment of the present application;
FIG. 7 illustrates a schematic diagram of a number of HARQ-ACK bit(s) transmitted in a first radio resource pool according to one embodiment of the present application;
FIG. 8 illustrates a schematic diagram of a HARQ process of a first type and a HARQ process of a second type according to one embodiment of the present application;
FIG. 9 illustrates a schematic diagram of relations among a first PUSCH, a first PUCCH resource and a target PDSCH according to one embodiment of the present application;
FIG. 10 illustrates a flowchart of the processing of a first node according to one embodiment of the present application;
FIG. 11 illustrates a flowchart of the processing of a first node according to one embodiment of the present application;
FIG. 12 illustrates a schematic diagram of a first field in a first DCI according to one embodiment of the present application;

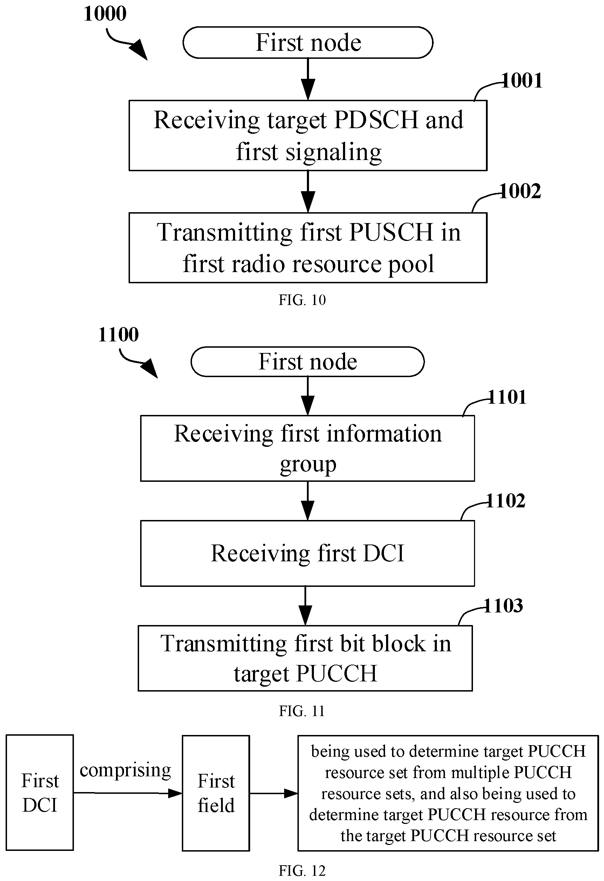

FIG. 12 illustrates a schematic diagram of a second field and a third field in a first DCI according to one embodiment of the present application;

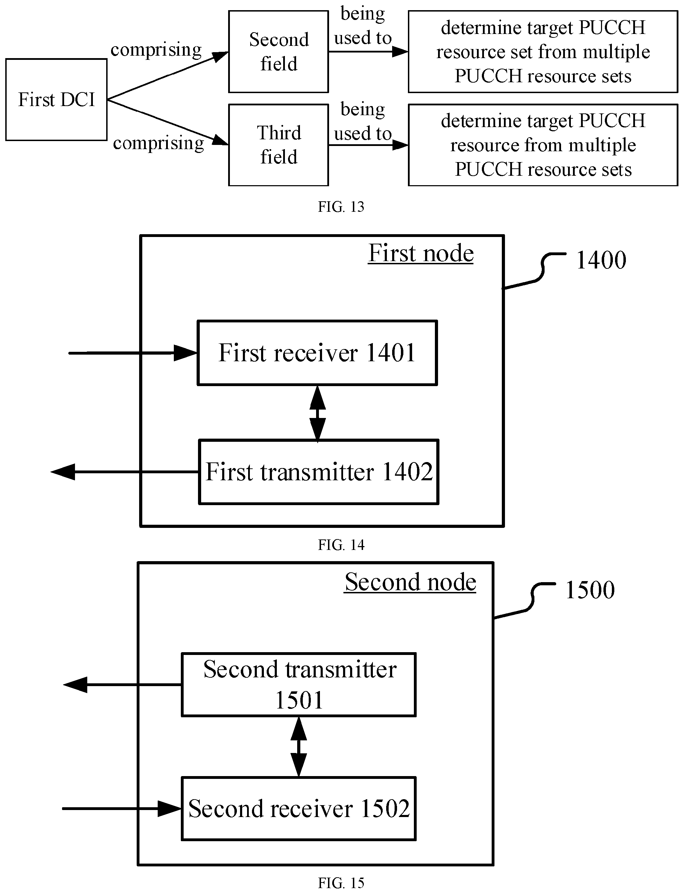

FIG. 14 illustrates a structure block diagram of a processor in a first node according to one embodiment of the present application;

FIG. 15 illustrates a structure block diagram of a processor in second node according to one embodiment of the present application.

## DESCRIPTION OF THE EMBODIMENTS

The technical solution of the present application will be further described in detail below in combination with the drawings. It should be noted that, in the case of no conflict, the embodiments of the present application and the features in the embodiments may be combined with each other arbitrarily.

## Embodiment 1

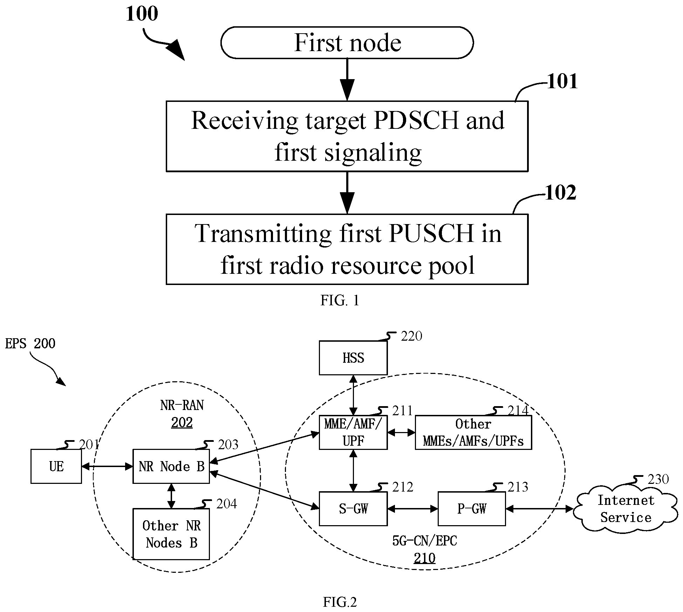

Embodiment 1 illustrates a flowchart of processing of a first node according to one embodiment of the present application, as shown in FIG. 1.

In Embodiment 1, the first node in the present application receives a target PDSCH and a first signaling in step 101; transmits a first PUSCH in a first radio resource pool in step 102.

In embodiment 1, the first signaling is used to determine a first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

In one embodiment, the target PDSCH is received before the first signaling.

In one embodiment, the target PDSCH is received after the first signaling.

In one embodiment, the meaning of the expression of receiving a target PDSCH comprises: receiving at least one Transport Block (TB) in a target PDSCH.

In one embodiment, the meaning of the expression of receiving a target PDSCH comprises: receiving at least one Code Block (CB) in a target PDSCH.

In one embodiment, the meaning of the expression of receiving a target PDSCH comprises: performing decoding on a signal received in a target PDSCH.

In one embodiment, the target PDSCH is a Physical Downlink Shared Channel (PDSCH).

In one embodiment, the target PDSCH is an SPS PDSCH, or a PDSCH scheduled in DCI format 1_0 with a counter DAI field value of 1 on a PCell.

In one embodiment, the first signaling is a physical-layer signaling.

In one embodiment, the first signaling is a Downlink control information (DCI) format.

In one embodiment, the first signaling is one of DCI format 0_0, DCI format 0_1 and DCI format 0_2.

In one embodiment, the first signaling is DCI format 0_0, for the specific meaning of the DCI format 0_0, refer to chapter 7.3.1.1 in 3GPP TS38.212.

In one embodiment, the first signaling is DCI format 0_1, for the specific meaning of the DCI format 0_1, refer to chapter 7.3.1.1 in 3GPP TS38.212.

In one embodiment, the first signaling is DCI format 0_2, for the specific meaning of the DCI format 0_2, refer to chapter 7.3.1.1 in 3GPP TS38.212.

In one embodiment, the first signaling comprises one or multiple fields in a DCI format.

In one embodiment, the first signaling is a higher-layer signaling.

In one embodiment, the first signaling is an RRC signaling.

In one embodiment, the first signaling comprises one or multiple fields in an RRC signaling.

In one embodiment, the first signaling comprises an IE.

In one embodiment, the second signaling comprises one or multiple fields in an IE.

In one embodiment, the first signaling is a Medium Access Control layer Control Element (MAC CE) signaling.

In one embodiment, the first signaling comprises one or multiple fields in a MAC CE signaling.

In one embodiment, the first signaling is an UpLink Grant Signaling.

In one embodiment, the meaning of the expression in the present application of transmitting a first PUSCH in a first radio resource pool comprises: transmitting at least one bit in a first PUSCH in a first radio resource pool.

In one embodiment, the meaning of the expression in the present application of transmitting a first PUSCH in a first radio resource pool comprises: transmitting at least a first bit block in a first PUSCH, the first bit block comprising at least one bit, and resources occupied by the first PUSCH belonging to a first radio resource pool.

In one embodiment, the first bit block in the present application comprises a Transport Block (TB).

In one embodiment, the first bit block in this application comprises at least one Code Block (CB).

In one embodiment, the first bit block in this application comprises at least one Code Block Group (CBG).

In one embodiment, the first bit block in the present application comprises a Channel state information (CSI) bit.

In one embodiment, the first bit block in the present application is transmitted in the first PUSCH through at least part of CRC attachment, Code block segmentation, Code block CRC attachment, Channel coding, Rate matching, Code block concatenation, Scrambling, Modulation, Spreading, Layer Mapping, Transform precoding, Precoding, mapping to physical resources, multicarrier symbol generation, modulation and upconversion.

In one embodiment, the first signaling is used to indicate the first radio resource pool.

In one embodiment, the first signaling is used to explicitly indicate the first radio resource pool.

In one embodiment, the first signaling is used to implicitly indicate the first radio resource pool.

In one embodiment, the first signaling is used to indicate time-domain resources and frequency-domain resources occupied by the first radio resource pool.

In one embodiment, the first radio resource pool is reserved for the first PUSCH.

In one embodiment, the first radio resource pool is resources reserved for a transmission of the first PUSCH.

In one embodiment, the first radio resource pool comprises radio resources occupied by the first PUSCH.

In one embodiment, the first radio resource pool is radio resources occupied by the first PUSCH.

In one embodiment, the first radio resource pool is resources occupied by a transmission of the first PUSCH.

In one embodiment, the first radio resource pool comprises multiple REs in time-frequency domain.

In one embodiment, the RE in the present application comprises a subcarrier in frequency domain, and comprises a multicarrier symbol in time domain.

In one embodiment, the multicarrier symbol in the present application is an Orthogonal Frequency Division Multiplexing (OFDM) symbol.

In one embodiment, the multicarrier symbol in the present application is a Single Carrier- Frequency Division Multiple Access (SC-FDMA) symbol.

In one embodiment, the multicarrier symbol in the present application is a Discrete Fourier Transform Spread OFDM (DFT-S-OFDM) symbol.

In one embodiment, the multicarrier symbol in the present application is a Filter Bank Multicarrier (FBMC) symbol.

In one embodiment, the multicarrier symbol in the present application comprises a Cyclic Prefix (CP).

In one embodiment, HARQ process corresponding to the target PDSCH is a HARQ process used by the target PDSCH.

In one embodiment, a HARQ process corresponding to the target PDSCH is a HARQ process assigned to the target PDSCH.

In one embodiment, a HARQ process corresponding to the target PDSCH is a HARQ process indicated by a DCI format scheduling the target PDSCH.

In one embodiment, a HARQ process number of a HARQ process corresponding to the target PDSCH ranges from 0 to 15.

In one embodiment, a HARQ process number of a HARQ process corresponding to the target PDSCH ranges from 0 to 31.

In one embodiment, a HARQ process of the first type and a HARQ process of the second type are respectively two different types of HARQ processes.

In one embodiment, a HARQ process of the first type and a HARQ process of the second type are respectively two different types of HARQ processes distinguished by an RRC signaling.

In one embodiment, a HARQ process of the first type and a HARQ process of the second type are respectively two different types of HARQ processes distinguished by a MAC CE signaling.

In one embodiment, a HARQ process of the first type is a HARQ process configured with enabled HARQ-ACK feedback, and a HARQ process of the second type is a HARQ process configured with disabled HARQ feedback.

In one embodiment, a HARQ process of the second type is a HARQ-ACK feedback-enabled HARQ process, and a HARQ process of the second type is a HARQ process configured with HARQ-ACK feedback-disabled.

In one embodiment, a HARQ process of the first type is a HARQ process configured with enabled HARQ-ACK feedback, and a HARQ process of the second type is a HARQ process configured with disabled HARQ feedback.

In one embodiment, a HARQ process of the first type is a HARQ-ACK feedback-disabled HARQ process, and a HARQ process of the second type is a HARQ-ACK feedback-enabled HARQ process.

In one embodiment, a HARQ process of the first type is a HARQ process enabling HARQ-ACK feedback, and a HARQ process of the second type is a HARQ process disabling HARQ-ACK feedback.

In one embodiment, a HARQ process of the second type is a HARQ process enabling HARQ-ACK feedback, and a HARQ process of the first type is a HARQ process disabling HARQ-ACK feedback.

In one embodiment, a HARQ process of the first type and a HARQ process of the second type respectively adopt HARQ processes with different feedback processing methods.

In one embodiment, a HARQ process of the first type and a HARQ process of the second type respectively adopt HARQ processes with different HARQ-ACK feedback processing methods.

In one embodiment, a HARQ process of the first type and a HARQ process of the second type are respectively HARQ processes configured with different HARQ-ACK feedback processing methods.

In one embodiment, a HARQ process of the first type and a HARQ process of the second type are respectively HARQ processes configured with different parameter values for indicating different HARQ-ACK feedback processing methods.

In one embodiment, a HARQ process number corresponding to a HARQ process of the first type belongs to a first value range, a HARQ process number corresponding to a HARQ process of the second type does not belong to the first value range, and the first value range is configured by an RRC signaling.

In one embodiment, a HARQ process number corresponding to a HARQ process of the second type belongs to a first value range, a HARQ process number corresponding to a HARQ process of the first type does not belong to the first value range, and the first value range is configured by an RRC signaling.

In one embodiment, a HARQ process of the first type and a HARQ process of the second type are respectively HARQ processes configured to different TRPs.

In one embodiment, a HARQ process of the first type and a HARQ process of the second type are respectively HARQ processes configured to different service types.

In one embodiment, the first field is a Downlink Assignment Index (DAI) field.

In one embodiment, the first field is a DAI field in a DCI format scheduling a PUSCH.

In one embodiment, the first field comprises only one bit.

In one embodiment, a value of the first field is equal to one of 0 or 1.

In one embodiment, the first field is for a semi-static HARQ-ACK codebook.

In one embodiment, the first field is a field used for counting.

In one embodiment, the first field comprises 2 bits, and a value of the first field is equal to one of 00,01 and 11.

In one embodiment, the first node does not receive any PDSCH other than the target PDSCH, nor does it receive a DCI format indicating an SPS (semi-persistent scheduling) PDSCH release in a first time window, the first time window comprises at least one slot, and an end time of the first time window is not later than an end time of a slot to which the first radio resource pool belongs in time domain.

In one subembodiment of the above embodiment, the first time window comprises continuous 9 slots, and an end time of the first time window is an end time of a slot to which the first radio resource pool belongs in time domain.

In one embodiment, the value of the first field in the first signaling and the HARQ process corresponding to the target PDSCH are used together to indicate whether the first radio resource pool is used to transmit HARQ-ACK bit(s).

In one embodiment, the meaning of the expression that a value of the first field in the first signaling and the HARQ process corresponding to the target PDSCH are both used to determine whether the first radio resource pool is used to transmit HARQ-ACK bit(s) comprises: the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first node aborts transmitting a HARQ-ACK bit in the first radio resource pool.

In one embodiment, the meaning of the expression that a value of the first field in the first signaling and the HARQ process corresponding to the target PDSCH are both used to determine whether the first radio resource pool is used to transmit HARQ-ACK bit(s) comprises: the first field comprises one bit; when the value of the first field in the first signaling is equal to 1 and the HARQ process corresponding to the target PDSCH is a HARQ process of the first type, the first radio resource pool is used to transmit at least one HARQ-ACK bit; when the value of the first field in the first signaling is equal to 0 or the HARQ process corresponding to the target PDSCH is a HARQ process of the second type, the first node aborts transmitting a HARQ-ACK bit in the first radio resource pool.

In one embodiment, the meaning of the expression that a value of the first field in the first signaling and the HARQ process corresponding to the target PDSCH are both used to determine whether the first radio resource pool is used to transmit HARQ-ACK bit(s) comprises: the first field comprises one bit; when the value of the first field in the first signaling is equal to 0 or the HARQ process corresponding to the target PDSCH is a HARQ process of the first type, the first radio resource pool is used to transmit at least one HARQ-ACK bit; when the value of the first field in the first signaling is equal to 1 and the HARQ process corresponding to the target PDSCH is a HARQ process of the second type, the first node aborts transmitting a HARQ-ACK bit in the first radio resource pool.

In one embodiment, the meaning of the expression that a value of the first field in the first signaling and the HARQ process corresponding to the target PDSCH are both used to determine whether the first radio resource pool is used to transmit HARQ-ACK bit(s) comprises: the first field comprises one bit; when the value of the first field in the first signaling is equal to 0 and the HARQ process corresponding to the target PDSCH is a HARQ process of the first type, the first radio resource pool is used to transmit at least one HARQ-ACK bit; when the value of the first field in the first signaling is equal to 1 or the HARQ process corresponding to the target PDSCH is a HARQ process of the second type,

the first node aborts transmitting a HARQ-ACK bit in the first radio resource pool.

In one embodiment, the HARQ-ACK bit in the present application is a HARQ-ACK information bit.

## Embodiment 2

Embodiment 2 illustrates a schematic diagram of a network architecture according to the present application, as shown in FIG. 2.

FIG. 2 illustrates a network architecture 200 of 5G NR, Long-Term Evolution (LTE) and Long-Term Evolution Advanced (LTE-A) systems. The NR 5G or LTE network architecture 200 may be called an Evolved Packet System (EPS) 200 or other appropriate terms. The EPS 200 may comprise one or more UEs 201, an NG-RAN 202, an Evolved Packet Core/ 5G-Core Network (EPC/5G-CN) 210, a Home Subscriber Server (HSS) 220 and an Internet Service 230. The EPS 200 may be interconnected with other access networks. For simple description, the entities/interfaces are not shown. As shown in FIG. 2, the EPS 200 provides packet switching services. Those skilled in the art will readily understand that various concepts presented throughout the present application can be extended to networks providing circuit switching services or other cellular networks. The NG-RAN 202 comprises an NR node B (gNB) 203 and other gNBs 204. The gNB 203 provides UE 201-oriented user plane and control plane protocol terminations. The gNB 203 may be connected to other gNBs 204 via an Xn interface (for example, backhaul). The gNB 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The gNB 203 provides an access point of the EPC/5G-CN 210 for the UE 201. Examples of the UE 201 include cellular phones, smart phones, Session Initiation Protocol (SIP) phones, laptop computers, Personal Digital Assistant (PDA), satellite Radios, non-terrestrial base station communications, Satellite Mobile Communications, Global Positioning Systems (GPSs), multimedia devices, video devices, digital audio players (for example, MP3 players), cameras, game consoles, unmanned aerial vehicles (UAV), aircrafts, narrow-band Internet of Things (loT) devices, machine-type communication devices, land vehicles, automobiles, wearable devices, or any other similar functional devices. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The gNB 203 is connected to the EPC/5G-CN 210 via an S1/NG interface. The EPC/5G-CN 210 comprises an Mobility Management Entity (MME)/ Authentication Management Field (AMF)/ User Plane Function (UPF) 211, other MMEs/ AMFs/ UPFs 214, a Service Gateway (S-GW) 212 and a Packet Date Network Gateway (P-GW) 213. The MME/AMF/UPF 211 is a control node for processing a signaling between the UE 201 and the EPC/5G-CN 210. Generally, the MME/AMF/UPF 211 provides bearer and connection management. All user Internet Protocol (IP) packets are transmitted through the S-GW 212, the S-GW 212 is connected to the P-GW 213. The P-GW 213 provides UE IP address allocation and other functions. The P-GW 213 is connected to the Internet Service 230. The Internet Service 230 comprises IP services corresponding to operators, specifically including Internet, Intranet, IP Multimedia Subsystem (IMS) and Packet Switching Streaming Services (PSS).

In one embodiment, the UE 201 corresponds to the first node in the present application.

In one embodiment, the UE 201 corresponds to the second node in the present application.

In one embodiment, the gNB 203 corresponds to the first node in the present application.

In one embodiment, the gNB 203 corresponds to the second node in the present application.

In one embodiment, the UE 201 corresponds to the first node in the present application, and the gNB 203 corresponds to the second node in the present application.

In one embodiment, the gNB 203 is a MarcoCellular base station.

In one embodiment, the gNB 203 is a Micro Cell base station.

In one embodiment, the gNB 203 is a PicoCell base station.

In one embodiment, the gNB 203 is a Femtocell.

In one embodiment, the gNB 203 is a base station that supports large delay differences.

In one embodiment, the gNB 203 is a flight platform.

In one embodiment, the gNB 203 is satellite equipment.

In one embodiment, both the first node and the second node in the present application correspond to the UE 201, for example, V2X communications are performed between the first node and the second node.

## Embodiment 3

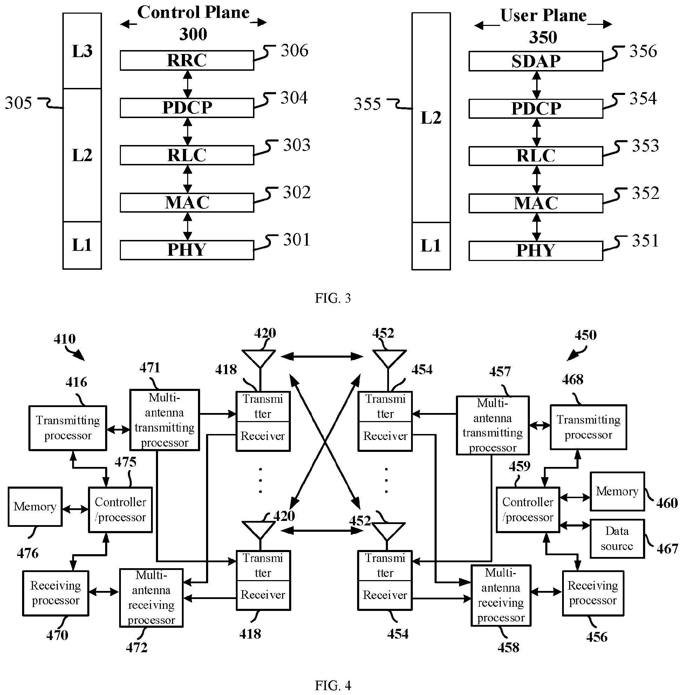

Embodiment 3 illustrates a schematic diagram of an example of a radio protocol architecture of a user plane and a control plane according to one embodiment of the present application, as shown in FIG. 3. FIG. 3 is a schematic diagram illustrating an embodiment of a radio protocol architecture of a user plane 350 and a control plane 300. In FIG.

3, the radio protocol architecture for a first communication node (UE, gNB or an RSU in V2X) and a second communication node (gNB, UE or an RSU in V2X), or between two UEs is represented by three layers, which are a layer 1, a layer 2 and a layer 3, respectively. The layer 1 (L1) is the lowest layer and performs signal processing functions of various PHY layers. The L1 is called PHY 301 in the present application. The layer 2 (L2) 305 is above the PHY 301, and is in charge of a link between a first communication node and a second communication node, as well as two UEs via the PHY 301. L2 305 comprises a Medium Access Control (MAC) sublayer 302, a Radio Link Control (RLC) sublayer 303 and a Packet Data Convergence Protocol (PDCP) sublayer 304. All the three sublayers terminate at the second communication node. The PDCP sublayer 304 provides multiplexing among variable radio bearers and logical channels. The PDCP sublayer 304 provides security by encrypting a packet and provides support for a first communication node handover between second communication nodes. The RLC sublayer 303 provides segmentation and reassembling of a higher-layer packet, retransmission of a lost packet, and reordering of a data packet so as to compensate the disordered receiving caused by HARQ. The MAC sublayer 302 provides multiplexing between a logical channel and a transport channel. The MAC sublayer 302 is also responsible for allocating between first communication nodes various radio resources (i.e., resource block) in a cell. The MAC sublayer 302 is also in charge of HARQ operation. The Radio Resource Control (RRC) sublayer 306 in layer 3 (L3) of the control plane 300 is responsible for acquiring radio resources (i.e., radio bearer) and configuring the lower layer with an RRC signaling between a second communication node and a first communication node device. The radio protocol architecture of the user plane 350 comprises layer 1 (L1) and layer 2 (L2). In the user plane 350, the radio protocol architecture for the first communication node and the second communication node is almost the same as the corresponding layer and sublayer in the control plane 300 for physical layer 351, PDCP sublayer 354, RLC sublayer 353 and MAC sublayer 352 in L2 layer 355, but the PDCP sublayer 354 also provides a header compression for a higher-layer packet so as to reduce a radio transmission overhead. The L2 layer 355 in the user plane 350 also includes Service Data Adaptation Protocol (SDAP) sublayer 356, which is responsible for the mapping between QoS flow and Data Radio Bearer (DRB) to support the diversity of traffic. Although not described in FIG. 3, the first communication node may comprise several higher layers above the L2 layer 355, such as a network layer (e.g., IP layer) terminated at a P-GW of the network side and an application layer terminated at the other side of the connection (e.g., a peer UE, a server, etc.).

In one embodiment, the radio protocol architecture in FIG. 3 is applicable to the first node in the present application.

In one embodiment, the radio protocol architecture in FIG. 3 is applicable to the second node in the present application.

In one embodiment, the first signaling in the present application is generated by the RRC sublayer 306.

In one embodiment, the first signaling in the present application is generated by the MAC sublayer 302.

In one embodiment, the first signaling in the present application is generated by the MAC sublayer 352.

In one embodiment, the first signaling in the present application is generated by the PHY 301.

In one embodiment, the first signaling in the present application is generated by the PHY 351.

In one embodiment, the first bit block in the present application is generated by the SDAP sublayer 356.

In one embodiment, the first bit block in the present application is generated by the RRC sublayer 306.

In one embodiment, the first bit block in the present application is generated by the MAC sublayer 302.

In one embodiment, the first bit block in the present application is generated by the MAC sublayer 352.

In one embodiment, the first bit block in the present application is generated by the PHY 301.

In one embodiment, the first bit block in the present application is generated by the PHY 351.

In one embodiment, information in the first information group in the present application is generated by the RRC sublayer 306.

In one embodiment, information in the first information group in the present application is generated by the MAC sublayer 302.

In one embodiment, information in the first information group in the present application is generated by the MAC sublayer 352.

In one embodiment, information in the first information group in the present application is generated by the PHY 301.

In one embodiment, information in the first information group in the present application is generated by the PHY 351.

## Embodiment 4

Embodiment 4 illustrates a schematic diagram of a first communication device and a second communication device in the present application, as shown in FIG. 4. FIG. 4 is a block diagram of a first communication device 410 in communication with a second communication device 450 in an access network.

The first communication device 410 comprises a controller/ processor 475, a memory 476, a receiving processor 470, a transmitting processor 416, a multi-antenna receiving processor 472, a multi-antenna transmitting processor 471, a transmitter/ receiver 418 and an antenna 420.

The second communication device 450 comprises a controller/ processor 459, a memory 460, a data source 467, a transmitting processor 468, a receiving processor 456, a multi-antenna transmitting processor 457, a multi-antenna receiving processor 458, a transmitter/receiver 454 and an antenna 452.

In a transmission from the first communication device 410 to the second communication device 450, at the first communication device 410, a higher layer packet from the core network is provided to a controller/ processor 475. The controller/processor 475 provides a function of the L2 layer. In the transmission from the first communication device 410 to the first communication device 450, the controller/ processor 475 provides header compression, encryption, packet segmentation and reordering, and multiplexing between a logical channel and a transport channel, and radio resources allocation to the second communication device 450 based on various priorities. The controller/ processor 475 is also responsible for retransmission of a lost packet and a signaling to the second communication device 450. The transmitting processor 416 and the multi-antenna transmitting processor 471 perform various signal processing functions used for the L1 layer (that is, PHY). The transmitting processor 416 performs coding and interleaving so as to ensure an FEC (Forward Error Correction) at the second communication device 450, and the mapping to signal clusters corresponding to each modulation scheme (i.e., BPSK, QPSK, M-PSK, M-QAM, etc.). The multi-antenna transmitting processor 471 performs digital spatial precoding, including codebook-based precoding and non-codebook-based precoding, and beamforming on encoded and modulated symbols to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream. Each radio frequency stream is later provided to different antennas 420.

In a transmission from the first communication device 410 to the second communication device 450, at the second communication device 450, each receiver 454 receives a signal via a corresponding antenna 452. Each receiver 454 recovers information modulated to the RF carrier, converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs receiving analog precoding/beamforming on a baseband multicarrier symbol stream from the receiver 454. The receiving processor 456 converts the baseband multicarrier symbol stream after receiving the analog precoding/beamforming from time domain into frequency domain using FFT. In frequency domain, a physical layer data signal and a reference signal are de-multiplexed by the receiving processor 456, wherein the reference signal is used for channel estimation, while the data signal is subjected to multi-antenna detection in the multi-antenna receiving processor 458 to recover any the second communication device-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted on the physical channel by the first communication node 410. Next, the higher-layer data and control signal are provided to the controller/processor 459. The controller/processor 459 performs functions of the L2 layer. The controller/processor 459 can be connected to a memory 460 that stores program code and data. The memory 460 can be called a computer readable medium. In the transmission from the first communication device 410 to the second communication device 450, the controller/ processor 459 provides demultiplexing between a transport channel and a logical channel, packet reassembling, decryption, header decompression and control signal processing so as to recover a higher-layer packet from the core network. The higher-layer packet is later provided to all protocol layers above the L2 layer, or various control signals can be provided to the L3 layer for processing.

In a transmission from the second communication device 450 to the first communication device 410, at the second communication device 450, the data source 467 is configured to provide a higher-layer packet to the controller/processor 459. The data source 467 represents all protocol layers above the L2 layer. Similar to a transmitting function of the first communication device 410 described in the transmission from the first communication device 410 to the second communication device 450, the controller/processor 459 performs header compression, encryption, packet segmentation and reordering, and multiplexing between a logical channel and a transport channel based on radio resources allocation so as to provide the L2 layer functions used for the user plane and the control plane. The controller/processor 459 is also responsible for retransmission of a lost packet, and a signaling to the first communication device 410. The transmitting processor 468 performs modulation mapping and channel coding. The multi-antenna transmitting processor 457 implements digital multi-antenna spatial precoding, including codebook-based precoding and non-codebook-based precoding, as well as beamforming. Following that, the generated spatial streams are modulated into multicarrier/single-carrier symbol streams by the transmitting processor 468, and then modulated symbol streams are subjected to analog precoding/beamforming in the multi-antenna transmitting processor 457 and provided from the transmitters 454 to each antenna 452. Each transmitter 454 first converts a baseband symbol stream provided by the multi-antenna transmitting processor 457 into a radio frequency symbol stream, and then provides the radio frequency symbol stream to the antenna 452.

In the transmission from the second communication device 450 to the first communication device 410, the function of the first communication device 410 is similar to the receiving function of the second communication device 450 described in the transmission from the first communication device 410 to the second communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and multi-antenna receiving processor 472 collectively provide functions of the L1 layer. The controller/processor 475 provides functions of the L2 layer. The controller/processor 475 can be connected with the memory 476 that stores program code and data. The memory 476 can be called a computer readable medium. In the transmission from the second communication device 450 to the first communication device 410, the controller/processor 475 provides de-multiplexing between a transport channel and a logical channel, packet reassembling, decryption, header decompression, control signal processing so as to recover a higher-layer packet from the UE 450. The higher-layer packet coming from the controller/processor 475 may be provided to the core network.

In one embodiment, the first node in the present application comprises the second communication device 450, and the second node in the present application comprises the first communication device 410.

In one subembodiment of the above embodiment, the first node is a UE, and the second node is a UE.

In one subembodiment of the above embodiment, the first node is a UE, and the second node is a relay node.

In one subembodiment of the above embodiment, the first node is a relay node, and the second node is a UE.

In one subembodiment of the above embodiment, the first node is a UE, and the second node is a base station.

In one subembodiment of the above embodiment, the first node is a relay node, and the second node is a base station.

In one subembodiment of the above embodiment, the second node is a UE, and the first node is a base station.

In one subembodiment of the above embodiment, the second node is a relay node, and the first node is a base station.

In one subembodiment of the above embodiment, the second communication device 450 comprises: at least one controller/ processor; the at least one controller/ processor is responsible for HARQ operation.

In one subembodiment of the above embodiment, the first communication device 410 comprises: at least one controller/ processor; the at least one controller/ processor is responsible for HARQ operation.

In one subembodiment of the above embodiment, the first communication device 410 comprises: at least one controller/ processor; the at least one controller/ processor is responsible for error detection using ACK and/ or NACK protocols as a way to support HARQ operation.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: receives a target PDSCH and a first signaling; transmits a first PUSCH in a first radio resource pool; herein, the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

In one subembodiment of the above embodiment, the second communication device 450 corresponds to the first node in the present application.

In one embodiment, the second communication device 450 comprises a memory that stores a computer readable instruction program. The computer readable instruction program generates an action when executed by at least one processor. The action includes: receiving a target PDSCH and a first signaling; transmitting a first PUSCH in a first radio resource pool; herein, the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

In one subembodiment of the above embodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least: transmits a target PDSCH and a first signaling; receives a first PUSCH in a first radio resource pool; herein, the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

In one subembodiment of the above embodiment, the first communication device 410 corresponds to the second node in the present application.

In one embodiment, the first communication device 410 comprises a memory that stores a computer readable instruction program. The computer readable instruction program generates an action when executed by at least one processor. The action includes: transmitting a target PDSCH and a first signaling; receiving a first PUSCH in a first radio resource pool; herein, the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

In one subembodiment of the above embodiment, the first communication device 410 corresponds to the second node in the present application.

In one embodiment, at least one of the antenna 452, the receiver 454, the multi-antenna receiving processor 458, the receiving processor 456, the controller / processor 459, the memory 460 or the data source 467 is used to receive the target PDSCH in the present application.

In one embodiment, at least one of the antenna 420, the transmitter 418, the multi-antenna transmitting processor 471, the transmitting processor 416, the controller/ processor 475 or the memory 476 is used to transmit the target PDSCH in the present application.

In one embodiment, at least one of the antenna 452, the receiver 454, the multi-antenna receiving processor 458, the receiving processor 456, the controller / processor 459, the memory 460, or the data source 467 is used to receive the first signaling in the present application.

In one embodiment, at least one of the antenna 420, the transmitter 418, the multi-antenna transmitting processor 471, the transmitting processor 416, the controller/ processor 475, or the memory 476 is used to transmit the first signaling in the present application.

In one embodiment, at least one of the antenna 452, the transmitter 454, the multi-antenna transmission processor 458, the transmitting processor 468, the controller/ processor 459, the memory 460, or the data source 467 is used to transmit the first PUSCH in the present application in the first radio resource pool in the present application.

In one embodiment, at least one of the antenna 420, the receiver 418, the multi-antenna receiving processor 472, the receiving processor 470, the controller/ processor 475, or the memory 476 is used to receive the first PUSCH in the present application in the first radio resource pool in the present application.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: receives a first signaling, and the first signaling comprises a first field; transmits a first PUSCH; herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion.

In one subembodiment of the above embodiment, the second communication device 450 corresponds to the first node in the present application.

In one embodiment, the second communication device 450 comprises a memory that stores a computer readable instruction program. The computer readable instruction program generates an action when executed by at least one processor. The action includes: receiving a first signaling, the first signaling comprising a first field; transmitting a first PUSCH; herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion.

In one subembodiment of the above embodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least: transmits a first signaling, and the first signaling comprises a first field; receives a first PUSCH; herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion.

In one subembodiment of the above embodiment, the first communication device 410 corresponds to the second node in the present application.

In one embodiment, the first communication device 410 comprises a memory that stores a computer readable instruction program. The computer readable instruction program generates an action when executed by at least one processor. The action includes: transmitting a first signaling, the first signaling comprising a first field; receiving a first PUSCH; herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion.

In one embodiment, at least one of the antenna 452, the receiver 454, the multi-antenna receiving processor 458, the receiving processor 456, the controller / processor 459, the memory 460, or the data source 467 is used to receive the first signaling in the present application.

In one embodiment, at least one of the antenna 420, the transmitter 418, the multi-antenna transmitting processor 471, the transmitting processor 416, the controller/ processor 475, or the memory 476 is used to transmit the first signaling in the present application.

In one embodiment, at least one of the antenna 452, the transmitter 454, the multi-antenna transmitting processor 458, the transmitting processor 468, the controller/processor 459, the memory 460, or the data sources 467 is used to transmit the first PUSCH in the present application.

In one embodiment, at least one of the antenna 420, the receiver 418, the multi-antenna receiving processor 472, the receiving processor 470, the controller/ processor 475, or the memory 476 is used to receive the first PUSCH in the present application.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: receives a target PDSCH and a first signaling; transmits a first PUSCH in a first radio resource pool; herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, a transmission of a HARQ-ACK bit for the target PDSCH is aborted in the first radio resource pool.

In one subembodiment of the above embodiment, the second communication device 450 corresponds to the first node in the present application.

In one embodiment, the second communication device 450 comprises a memory that stores a computer readable instruction program. The computer readable instruction program generates an action when executed by at least one processor. The action includes: receiving a target PDSCH and a first signaling; transmitting a first PUSCH in a first radio resource pool; herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, a transmission of a HARQ-ACK bit for the target PDSCH is aborted in the first radio resource pool.

In one subembodiment of the above embodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least: transmits a target PDSCH and a first signaling; receives a first PUSCH in a first radio resource pool; herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, the first radio resource pool is not used to transmit a HARQ-ACK bit for the target PDSCH.

In one subembodiment of the above embodiment, the first communication device 410 corresponds to the second node in the present application.

In one embodiment, the first communication device 410 comprises a memory that stores a computer readable instruction program. The computer readable instruction program generates an action when executed by at least one processor. The action includes: transmitting a target PDSCH and a first signaling; receiving a first PUSCH in a first radio resource pool; herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, the first radio resource pool is not used to transmit a HARQ-ACK bit for the target PDSCH.

In one subembodiment of the above embodiment, the first communication device 410 corresponds to the second node in the present application.

In one embodiment, the second communication device 450 comprises at least one processor and at least one memory. The at least one memory comprises computer program codes; the at least one memory and the computer program codes are configured to be used in collaboration with the at least one processor. The second communication device 450 at least: receives a first information group and a first DCI; transmits a first bit block in a target PUCCH, and the first bit block comprises at least one HARQ-ACK bit; herein, resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

In one subembodiment of the above embodiment, the second communication device 450 corresponds to the first node in the present application.

In one embodiment, the second communication device 450 comprises a memory that stores a computer readable instruction program. The computer readable instruction program generates an action when executed by at least one processor. The action includes: receiving a first information group and a first DCI; transmitting a first bit block in a target PUCCH, the first bit block comprising at least one HARQ-ACK bit; herein, resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

In one subembodiment of the above embodiment, the second communication device 450 corresponds to the first node in the present application.

In one embodiment, the first communication device 410 comprises at least one processor and at least one memory. The at least one memory comprises computer program codes; the at least one memory and the computer program codes are configured to be used in collaboration with the at least one processor. The first communication device 410 at least: transmits a first information group and a first DCI; receives a first bit block in a target PUCCH, and the first bit block comprises at least one HARQ-ACK bit; herein, resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

In one subembodiment of the above embodiment, the first communication device 410 corresponds to the second node in the present application.

In one embodiment, the first communication device 410 comprises a memory that stores a computer readable instruction program. The computer readable instruction program generates an action when executed by at least one processor. The action includes: transmitting a first information group and a first DCI; receiving a first bit block in a target PUCCH, the first bit block comprising at least one HARQ-ACK bit; herein, resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

In one subembodiment of the above embodiment, the first communication device 410 corresponds to the second node in the present application.

In one embodiment, at least one of the antenna 452, the receiver 454, the multi-antenna receiving processor 458, the receiving processor 456, the controller / processor 459, the memory 460 or the data source 467 is used to receive the first information group in the present application.

In one embodiment, at least one of the antenna 420, the transmitter 418, the multi-antenna transmitting processor 471, the transmitting processor 416, the controller/ processor 475 or the memory 476 is used to transmit the first information group in the present application.

In one embodiment, at least one of the antenna 452, the receiver 454, the multi-antenna receiving processor 458, the receiving processor 456, the controller / processor 459, the memory 460 or the data source 467 is used to receive the first DCI in the present application.

In one embodiment, at least one of the antenna 420, the transmitter 418, the multi-antenna transmitting processor 471, the transmitting processor 416, the controller/ processor 475 or the memory 476 is used to transmit the first DCI in the present application.

In one embodiment, at least one of the antenna 452, the transmitter 454, the multi-antenna transmission processor 458, the transmitting processor 468, the controller/ processor 459, the memory 460, or the data source 467 is used to transmit the first bit block in the present application in the target PUCCH in the present application.

In one embodiment, at least one of the antenna 420, the receiver 418, the multi-antenna receiving processor 472, the receiving processor 470, the controller/ processor 475, or the memory 476 is used to receive the first bit block in the present application in the target PUCCH in the present application.

## Embodiment 5

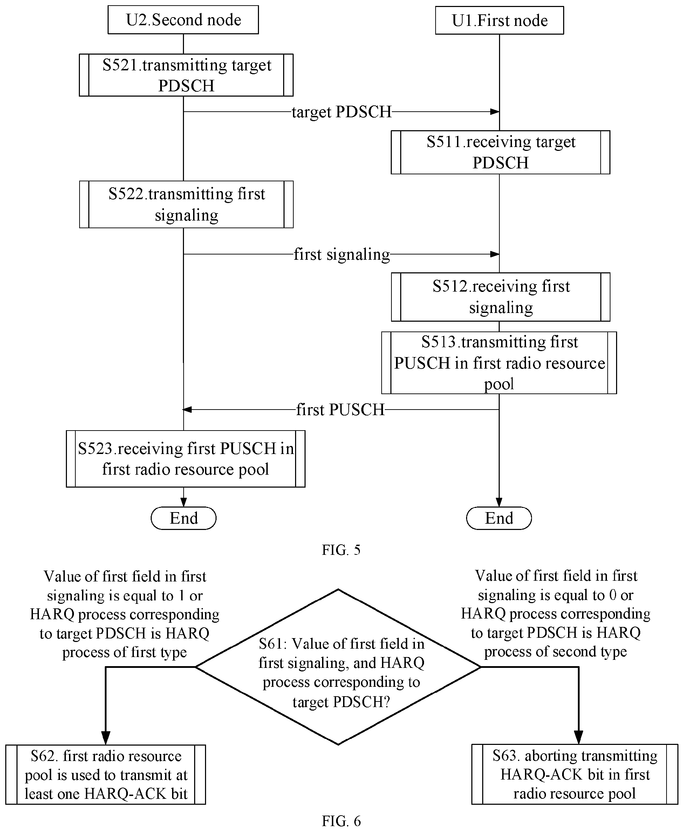

Embodiment 5 illustrates a flowchart of signal transmission according to one embodiment in the present application, as shown in FIG. 5. In FIG. 5, a first node U1 and a second node U2 are in communications via an air interface. Specifically, the sequence between the step pair {S521, S511} and the step pair {S522, S512} in FIG. 5 does not represent a specific temporal relation.

The first node U1 receives a target PDSCH in step S511; receives a first signaling in step S512; transmits a first PUSCH in a first radio resource pool in step S513.

The second node U2 transmits a target PDSCH in step S521; transmits a first signaling in step S522; receives a first PUSCH in a first radio resource pool in step S523.

In embodiment 5, the first signaling is used to determine a first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s); the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first node U1 aborts transmitting a HARQ-ACK bit in the first radio resource pool; when the HARQ process corresponding to the target PDSCH is a HARQ process of the first type:

the first radio resource pool is used to transmit at least one HARQ-ACK bit, and the at least one HARQ-ACK bit comprises a HARQ-ACK bit for the target PDSCH; a HARQ process of the first type is a HARQ process with enabled HARQ feedback, and a HARQ process of the second type is a HARQ process with disabled HARQ feedback.

In one subembodiment of embodiment 5, when the value of the first field in the first signaling is equal to 1 and the HARQ process corresponding to the target PDSCH is a HARQ process of the second type: the first radio resource pool is used to transmit at least one HARQ-ACK bit, and any HARQ-ACK bit in the at least one HARQ-ACK bit represents a NACK.

In one subembodiment of embodiment 5, when the value of the first field in the first signaling is equal to 1: the first radio resource pool is used to transmit at least one HARQ-ACK bit, and the at least one HARQ-ACK bit comprises a HARQ-ACK bit for the target PDSCH.

In one subembodiment of embodiment 5, a first PUCCH resource is associated with the target PDSCH, and the first PUCCH resource overlaps with resources occupied by the first PUSCH in time domain.

In one embodiment, the first node U1 is the first node in the present application.

In one embodiment, the second node U2 is the second node in the present application.

In one embodiment, the first node U1 is a UE.

In one embodiment, the first node U1 is a base station.

In one embodiment, the second node U2 is a base station.

In one embodiment, the second node U2 is a UE.

In one embodiment, an air interface between the second node U2 and the first node U1 is a Uu interface.

In one embodiment, an air interface between the second node U2 and the first node U1 comprises a cellular link.

In one embodiment, an air interface between the second node U2 and the first node U1 is a PC5 interface.

In one embodiment, an air interface between the second node U2 and the first node U1 comprises sidelink.

In one embodiment, an air interface between the second node U2 and the first node U1 comprises a radio interface between a base station and a UE.

In one embodiment, an air interface between the second node U2 and the first node U1 comprises a radio interface between a satellite and a UE.

In one embodiment, an air interface between the second node U2 and the first node U1 comprises a radio interface between a UE and a UE.

In one embodiment, the step pair {S521, S511} is earlier than the step pair {S522, S512} in time domain.

In one embodiment, the step pair {S521, S511} is later than the step pair {S522, S512} in time domain.

**Embodiment 6**

Embodiment 6 illustrates a schematic diagram of a value of a first field in a first signaling and a HARQ process corresponding to a target PDSCH being used to determine whether a first radio resource pool is used to transmit a HARQ-ACK bit according to one embodiment of the present application, as shown in FIG. 6. In FIG. 6: in S61, determine a value of a first field in a first signaling and which type of HARQ process a target PDSCH corresponds to; in S62, a first radio resource pool is used to transmit at least one HARQ-ACK bit; in S63, abort transmitting a HARQ-ACK bit in a first radio resource pool.

In embodiment 6, the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first node aborts transmitting a HARQ-ACK bit in the first radio resource pool.

In one embodiment, the meaning of the expression in the present application that the first radio resource pool is used to transmit at least one HARQ-ACK bit comprises: at least one HARQ-ACK bit is multiplexed in the first PUSCH, and resources occupied by the first PUSCH belong to the first radio resource pool.

In one embodiment, the meaning of the expression in the present application that the first radio resource pool is used to transmit at least one HARQ-ACK bit comprises: the first PUSCH is used to transmit at least one HARQ-ACK bit.

In one embodiment, the meaning of the expression in the present application that the first radio resource pool is used to transmit at least one HARQ-ACK bit comprises: the first node transmits at least one HARQ-ACK bit in the first PUSCH, and resources occupied by the first PUSCH belong to the first radio resource pool.

In one embodiment, the meaning of the expression in the present application that the first radio resource pool is used to transmit at least one HARQ-ACK bit comprises: the first node transmits at least a first bit block and a positive integer number of HARQ-ACK bit(s) in the first PUSCH, the first bit block comprises at least one bit, and resources occupied by the first PUSCH belong to the first radio resource pool.

In one embodiment, the meaning of the expression in the present application that the first radio resource pool is used to transmit at least one HARQ-ACK bit comprises: at least one HARQ-ACK bit is transmitted in the first PUSCH after being subjected to at least part of CRC attachment, code block segmentation, code block CRC attachment, channel coding, rate matching, code block concatenation, scrambling, modulation, spreading, layer mapping, Transform precoding, precoding, mapping to physical resources, multicarrier symbol generation, modulation and upconversion.

In one embodiment, the meaning of the expression in the present application that the first radio resource pool is used to transmit at least one HARQ-ACK bit comprises: the first PUSCH is used to carry at least one HARQ-ACK bit, and resources occupied by the first PUSCH belong to the first radio resource pool.

In one embodiment, the meaning of the expression in the present application that the first radio resource pool is used to transmit at least one HARQ-ACK bit comprises: the first PUSCH is used to bear at least a first bit block and a positive integer number of HARQ-ACK bit(s), the first bit block comprises at least one bit, and resources occupied by the first PUSCH belong to the first radio resource pool.

In one embodiment, the meaning of the expression in the present application that (the first node) aborts transmitting a HARQ-ACK bit in the first radio resource pool comprises: (the first node) aborts transmitting a HARQ-ACK bit in the first PUSCH.

In one embodiment, the meaning of the expression in the present application that (the first node) aborts transmitting a HARQ-ACK bit in the first radio resource pool comprises: the first radio resource pool is not used to transmit a HRRQ-ACK bit.

In one embodiment, the meaning of the expression in the present application that (the first node) aborts transmitting a HARQ-ACK bit in the first radio resource pool comprises: no HARQ-ACK bit is multiplexed in the first PUSCH.

In one embodiment, when the value of the first field in the first signaling is equal to 0 and the HARQ process corresponding to the target PDSCH is a HARQ process of the second type: the first node aborts transmitting a HARQ-ACK bit for the target PDSCH.

In one embodiment, a HARQ-ACK bit for the target PDSCH is: a HARQ-ACK bit indicating whether a TB in the target PDSCH is correctly decoded.

In one embodiment, the HARQ-ACK bit for the target PDSCH comprises: a HARQ-ACK bit indicating whether a TB in the target PDSCH is correctly decoded.

In one embodiment, the HARQ-ACK bit for the target PDSCH comprises: a HARQ-ACK bit indicating whether a Code Block Group (CBG) in the target PDSCH is correctly decoded.

In one embodiment, when the value of the first field in the first signaling is equal to 1 or the HARQ process corresponding to the target PDSCH is a HARQ process of the first type: the first radio resource pool is used to transmit at least one HARQ-ACK bit, and the at least one HARQ-ACK bit comprises a Type-1 HARQ-ACK codebook.

In one embodiment, for the determination method of the Type-1 HARQ-ACK codebook, refer to chapter 9.1.2 of 3GPP TS38. 213.

In one embodiment, the Type-1 HARQ-ACK codebook is a semi-static HARQ-ACK codebook.

## Embodiment 7

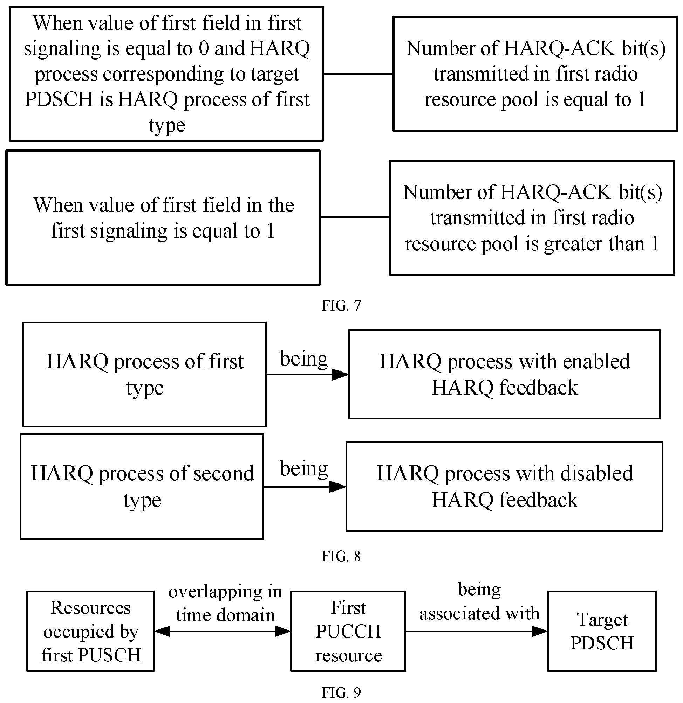

Embodiment 7 illustrates a schematic diagram of a number of HARQ-ACK bit(s) transmitted in a first radio resource pool according to one embodiment of the present application, as shown in FIG. 7.

In embodiment 7, when the value of the first field in the first signaling is equal to 0 and the HARQ process corresponding to the target PDSCH is a HARQ process of the first type: a number of HARQ-ACK bit(s) transmitted in the first radio resource pool is equal to 1; when the value of the first field in the first signaling is equal to 1: a number of HARQ-ACK bit(s) transmitted in the first radio resource pool is greater than 1.

In one embodiment, when the value of the first field in the first signaling is equal to 0 and the HARQ process corresponding to the target PDSCH is a HARQ process of the first type: only one HARQ-ACK bit transmitted in the first radio resource pool is a HARQ-ACK bit for the target PDSCH.

In one embodiment, when the value of the first field in the first signaling is equal to 1: one or multiple HARQ-ACK bits representing NACK are transmitted in the first radio resource pool.

## Embodiment 8

Embodiment 8 illustrates a schematic diagram of a HARQ process of a first type and a HARQ process of a second type according to one embodiment of the present application, as shown in FIG. 8.

In embodiment 8, a HARQ process of the first type is a HARQ process of HARQ feedback enabling, and a HARQ process of the second type is a HARQ process of HARQ feedback disabling.

In one embodiment, a HARQ process of the first type is a HARQ process configured with enabled HARQ-ACK feedback, and a HARQ process of the second type is a HARQ process configured with disabled HARQ feedback.

In one embodiment, a HARQ process number corresponding to a HARQ process of the first type belongs to a first value range, a HARQ process number corresponding to a HARQ process of the second type does not belong to the first value range, and the first value range is configured by an RRC signaling.

In one embodiment, a HARQ process number corresponding to a HARQ process of the second type belongs to a first value range, a HARQ process number corresponding to a HARQ process of the first type does not belong to the first value range, and the first value range is configured by an RRC signaling.

## Embodiment 9

Embodiment 9 illustrates a schematic diagram of relations among a first PUSCH, a first PUCCH resource and a target PDSCH according to one embodiment of the present application, as shown in FIG. 9.

In embodiment 9, a first PUCCH resource is associated with the target PDSCH, and the first PUCCH resource overlaps with resources occupied by the first PUSCH in time domain.

In one embodiment, the meaning of the expression that a first PUCCH resource is associated with the target PDSCH comprises: the first node also receives a second signaling, the second signaling is a DCI format, the second signaling is used to schedule or activate a reception of the target PDSCH, and the second signaling is used to indicate a first PUCCH resource.

In one subembodiment of the above embodiment, at least one of a PDSCH-to-HARQ_feedback timing indicator field or a PUCCH resource indicator field in the second signaling is used to indicate the first PUCCH resource.

In one subembodiment of the above embodiment, the second signaling is used to explicitly indicate the first PUCCH resource.

In one subembodiment of the above embodiment, the second signaling is used to implicitly indicate the first PUCCH resource.

In one embodiment, the meaning of the expression that a first PUCCH resource is associated with the target PDSCH comprises: the first PUCCH resource is reserved for a HARQ-ACK feedback for the target PDSCH.

In one embodiment, the first PUCCH resource and resources occupied by the first PUSCH occupy at least one same multicarrier symbol in time domain.

## Embodiment 10

Embodiment 10 illustrates a processing flowchart of a first node according to one embodiment of the present application, as shown in FIG. 10.

In Embodiment 10, the first node in the present application receives a target PDSCH and a first signaling in step 1001; transmits a first PUSCH in a first radio resource pool in step 1002.

In embodiment 10, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, the first node aborts transmitting a HARQ-ACK bit for the target PDSCH in the first radio resource pool.

In one embodiment, the first node is configured to use a Type-2 HARQ-ACK codebook for MBS and a Type-1 HARQ-ACK codebook for unicast services.

In one embodiment, the first node is configured to use a Type-1 HARQ-ACK codebook for MBS and a Type-2 HARQ-ACK codebook for unicast services.

In one embodiment, a G-RNTI is used for MBS, and a C-RNTI is used for unicast services.

In one embodiment, the meaning of the expression that (the first node) aborts transmitting a HARQ-ACK bit for the target PDSCH in the first radio resource pool comprises: the first radio resource pool is not used to transmit a HARQ-ACK bit for the target PDSCH.

In one embodiment, the meaning of the expression that (the first node) aborts transmitting a HARQ-ACK bit for the target PDSCH in the first radio resource pool comprises: no HARQ-ACK bit for the target PDSCH is multiplexed in the first PUSCH.

In one embodiment, the first signaling comprises a second field, and the second field comprises one bit; the first condition is: a value of the second field in the first signaling is equal to 0.

In one embodiment, the first condition is a condition related to a value of a second field in the first signaling, and the second field comprises 1 bit.

In one embodiment, the first signaling comprises a second field, and the second field comprises 2 bits.

In one embodiment, the second field is a DAI field.

In one embodiment, the second field is not the first field.

In one embodiment, the first condition is: a value of the second field in the first signaling is equal to 0.

In one embodiment, when the value of the first field in the first signaling is equal to 1, the first radio resource pool is used to transmit multiple HARQ-ACK bits, and the multiple HAQR-ACK bits comprise at least one HARQ-ACK bit for the target PDSCH; when the value of the first field in the first signaling is equal to 0 and the value of the second field in the first signaling is equal to 0, a number of HARQ-ACK bit(s) transmitted in the first radio resource pool is equal to 1.

In one embodiment, the first condition is a condition related to a detection result of the first node in a PDCCH monitoring occasion.

In one embodiment, the first condition is: a value of the second field in the first signaling is equal to 4, there does not detect a DCI format with CRC scrambled by a target RNTI scheduling a PDSCH reception or indicating an SPS PDSCH release or indicating an SCell dormancy on any serving cell in a PDCCH monitoring occasion, and the first node does not have HARQ-ACK information for an SPS PDSCH reception to be transmitted in the first radio resource pool.

In one embodiment, the first condition is: a value of the second field in the first signaling is equal to 4, there does not detect a DCI format whose comprised CRC is scrambled by a target RNTI and scheduling a PDSCH reception or indicating an SPS PDSCH release on any serving cell in a PDCCH monitoring occasion, and the first node does not have HARQ-ACK information to be transmitted in the first radio resource pool for an SPS PDSCH reception.

In one embodiment, the target RNTI comprises a G-RNTI.

In one embodiment, the target RNTI comprises a C-RNTI.

In one embodiment, when the value of the first field in the first signaling is equal to 0 and the first condition is not met: the first node aborts transmitting a HARQ-ACK bit for the target PDSCH.

In one embodiment, the first condition is: the first radio resource pool is not used to transmit a Type-2 HARQ-ACK codebook.

In one embodiment, for the determination method of the Type-2 HARQ-ACK codebook, refer to chapter 9.1.3 of 3GPP TS38. 213.

In one embodiment, the Type-2 HARQ-ACK codebook is a dynamic HARQ-ACK codebook.

In one embodiment, the first condition being satisfied refers to: the first radio resource pool is not used to transmit a Type-2 HARQ-ACK codebook; the first condition not being satisfied refers to: the first radio resource pool is used to transmit a Type-2 HARQ-ACK codebook.

In one embodiment, the first condition is: the first radio resource pool is not used to transmit a second-type HARQ-ACK codebook for a DCI format whose comprised CRC is scrambled by a target RNTI.

In one embodiment, a Type-2 HARQ-ACK codebook for a DCI format with CRC scrambled by the target RNTI comprises: at least one HARQ-ACK bit for SPS PDSCH reception(s) scheduled or indicated or activated by a DCI format with CRC scrambled by the target RNTI.

In one embodiment, the first condition is: the first radio resource pool is not used to transmit a Type-2 HARQ-ACK codebook for MBS.

In one embodiment, the first condition is: the first radio resource pool is not used to transmit a Type-2 HARQ-ACK codebook for unicast services.

In one embodiment, when the first radio resource pool is used to transmit a HARQ-ACK bit for the target PDSCH, a HARQ-ACK bit for the target PDSCH belongs to a Type-1 HARQ-ACK codebook.

In one embodiment, for the determination method of the Type-1 HARQ-ACK codebook, refer to chapter 9.1.2 of 3GPP TS38. 213.

In one embodiment, the Type-1 HARQ-ACK codebook is a semi-static HARQ-ACK codebook.

In one embodiment, when the value of the first field in the first signaling is equal to 0 and the first condition is met: a number of HARQ-ACK bit(s) transmitted in the first radio resource pool is equal to 1; when the value of the first field in the first signaling is equal to 1: a number of HARQ-ACK bit(s) transmitted in the first radio resource pool is greater than 1.

In one embodiment, a first PUCCH is associated with the target PDSCH, and there exists an overlapping between the first PUCCH and the first PUSCH in time domain.

In one embodiment, the first node receives a target PDSCH and a first signaling, and transmits a first PUSCH in a first radio resource pool; the second node transmits a target PDSCH and a first signaling, and receives a first PUSCH in a first radio resource pool; herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, the first node aborts transmitting a HARQ-ACK bit for the target PDSCH in the first radio resource pool.

In one subembodiment of the above embodiment, the first signaling comprises a second field, and the second field comprises one bit; the first condition is: a value of the second field in the first signaling is equal to 0.

In one subembodiment of the above embodiment, the first radio resource pool is used to transmit a Type-2 HARQ-ACK codebook or is not used to transmit a Type-2 HARQ-ACK codebook; the first condition is: the first radio resource pool is not used to transmit a Type-2 HARQ-ACK codebook.

In one subembodiment of the above embodiment, when the first radio resource pool is used to transmit a HARQ-ACK bit for the target PDSCH, a HARQ-ACK bit for the target PDSCH belongs to a Type-1 HARQ-ACK codebook.

In one subembodiment of the above embodiment, when the value of the first field in the first signaling is equal to 0 and the first condition is met: a number of HARQ-ACK bit(s) transmitted in the first radio resource pool is equal to 1; when the value of the first field in the first signaling is equal to 1: a number of HARQ-ACK bit(s) transmitted in the first radio resource pool is greater than 1.

In one subembodiment of the above embodiment, a first PUCCH is associated with the target PDSCH, and there exists an overlapping between the first PUCCH and the first PUSCH in time domain.

**Embodiment 11**

Embodiment 11 illustrates a processing flowchart of a first node according to one embodiment of the present application, as shown in FIG. 11.

In Embodiment 11, the first node in the present application receives a first information group in step 1101; receives a first DCI in step 1102; transmits a first bit block in a target PUCCH in step 1103.

In embodiment 11, the first bit block comprises at least one HARQ-ACK bit; resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

In one embodiment, the first information block comprises at least one information.

In one embodiment, information in the first information group is a higher-layer signaling.

In one embodiment, information in the first information group is an RRC signaling.

In one embodiment, information in the first information group comprises an Information Element (IE) PUCCH-Config.

In one embodiment, the first DCI is a DCI format.

In one embodiment, the first DCI is one of DCI format 1-0, DCI format 1,1, or DCI format 1-2.

In one embodiment, the first DCI is DCI format 1_0, and for the specific meaning of the DCI format 1_0, refer to chapter 7.3.1.2 in 3GPP TS38. 212.

In one embodiment, the first DCI is DCI format 1_1, and for the specific meaning of the DCI format 1_1, refer to s chapter 7.3.1.2 in 3GPP TS38. 212.

In one embodiment, the first DCI is DCI format 1_2, and for the specific meaning of the DCI format 1_2, refer to chapter 7.3.1.2 in 3GPP TS38. 212.

In one embodiment, the meaning of the expression in the present application of transmitting a first bit block in a target PUCCH comprises: the first bit block is transmitted in the target PUCCH after being subjected to at least sequence generation or sequence modulation, and mapped to physical resources.

In one embodiment, the meaning of the expression in the present application of transmitting a first bit block in a target PUCCH comprises: the first bit block is transmitted in the target PUCCH after being subjected to at least part of CRC attachment, Code block segmentation, Code block CRC attachment, Channel coding, Rate matching, Code block concatenation, Scrambling, Modulation or Sequence generation or Sequence modulation, Spreading or Block-wise spreading, transform precoding and mapping to physical resources.

In one embodiment, the first bit block comprises one or multiple bits.

In one embodiment, the first bit block comprises at most two UCI bits.

In one embodiment, each of bit(s) in the first bit block is a HARQ-ACK bit.

In one embodiment, the target PUCCH is a PUCCH.

In one embodiment, a number of PUCCH resource sets comprised in the multiple PUCCH resource sets is equal to 2.

In one embodiment, a number of PUCCH resource sets comprised in the multiple PUCCH resource sets is equal to 3.

In one embodiment, any PUCCH resource set in the multiple PUCCH resource sets is a PUCCH resource set reserved for transmission of at most two HARQ-ACK bits.

In one embodiment, any PUCCH resource set in the multiple PUCCH resource sets is a PUCCH resource set reserved for at most two UCI bits.

In one embodiment, the target PUCCH resource set is a PUCCH resource set in the multiple PUCCH resource sets, and the target PUCCH resource is a PUCCH resource in the target PUCCH resource set.

In one embodiment, the target PUCCH resource set is a PUCCH resource set, and the target PUCCH resource set comprises at most 8 PUCCH resources.

In one embodiment, the first DCI is used to indicate a target PUCCH resource set from multiple PUCCH resource sets, and is also used to indicate the target PUCCH resource set from the target PUCCH resource set.

In one embodiment, the first DCI is used to explicitly indicate a target PUCCH resource set from multiple PUCCH resource sets, and is also used to explicitly indicate the target PUCCH resource from the target PUCCH resource set.

In one embodiment, the first DCI is used to explicitly indicate a target PUCCH resource set from multiple PUCCH resource sets, and is also used to implicitly indicate the target PUCCH resource from the target PUCCH resource set.

In one embodiment, the first DCI is used to implicitly indicate a target PUCCH resource set from multiple PUCCH resource sets, and is also used to explicitly indicate the target PUCCH resource from the target PUCCH resource set.

In one embodiment, the first DCI is used to implicitly indicate a target PUCCH resource set from multiple PUCCH resource sets, and is also used to implicitly indicate the target PUCCH resource from the target PUCCH resource set.

In one embodiment, at least one information in the first information set is used to configure the multiple PUCCH resource sets.

In one embodiment, at least one information in the first information set is used to indicate the multiple PUCCH resource sets.

In one embodiment, information in the first information set is used to configure at least one PUCCH resource set among the multiple PUCCH resource sets.

In one embodiment, information in the first information set is used to indicate at least one PUCCH resource set among the multiple PUCCH resource sets.

In one embodiment, PUCCH-Config in the first information set is used to configure at least one PUCCH resource set among the multiple PUCCH resource sets.

In one embodiment, information whose name comprising PUCCH-Config in the first information group is used to configure at least one PUCCH resource set in the multiple PUCCH resource sets.

In one embodiment, two information whose name comprising PUCCH-Config in the first information group is respectively used to configure two PUCCH resource sets in the multiple PUCCH resource sets.

In one embodiment, the expression in the present application that the first DCI is used to determine a target PUCCH resource set from multiple PUCCH resource sets, and is also used to determine the target PUCCH resource from the target PUCCH resource set comprises: the first DCI comprises a first field, the first field in the first DCI is used to determine the target PUCCH resource set from the multiple PUCCH resource sets, and is also used to determine the target PUCCH resource from the target PUCCH resource set.

In one embodiment, the expression in the present application that the first DCI is used to determine a target PUCCH resource set from multiple PUCCH resource sets, and is also used to determine the target PUCCH resource from the target PUCCH resource set comprises: the first DCI comprises a first field, the first field in the first DCI is used to determine the target PUCCH resource set from the multiple PUCCH resource sets, and is also used to determine the target PUCCH resource from the target PUCCH resource set.

In one embodiment, there exist two PUCCH resource sets in the multiple PUCCH resource sets respectively corresponding to different HARQ-ACK feedback modes.

In one embodiment, the different HARQ-ACK feedback modes comprise: NACK-only feedback and ACK/NACK feedback.

In one embodiment, in the NACK-only feedback mode, HARQ-ACK information comprises NACK-only.

In one embodiment, in the ACK/NACK feedback mode, HARQ-ACK information comprises ACK or NACK.

In one embodiment, there exist two PUCCH resource sets in the multiple PUCCH resource sets being respectively configured with different HARQ-ACK feedback modes.

In one embodiment, at least one information in the first information group is configured with different HARQ-ACK feedback modes for two PUCCH resource sets in the multiple PUCCH resource sets.

In one embodiment, at least one information in the first information group indicates that two different HARQ-ACK feedback modes are respectively associated with two PUCCH resource sets in the multiple PUCCH resource sets.

In one embodiment, there exist two PUCCH resource sets in the multiple PUCCH resource sets respectively being configured with NACK-only feedback and ACK/NACK feedback.

In one embodiment, at least one information in the first information group is respectively configured with NACK-only feedback mode and ACK/NACK feedback mode for two PUCCH resource sets in the multiple PUCCH resource sets.

In one embodiment, at least one information in the first information group indicates that NACK-only feedback mode and ACK/NACK feedback mode are respectively associated with two PUCCH resource sets in the multiple PUCCH resource sets.

In one embodiment, at least one information in the first information group is configured with NACK-only feedback mode for at least one PUCCH resource set in the multiple PUCCH resource sets.

In one embodiment, when a PUCCH resource set is not configured as NACK-only feedback mode: the PUCCH resource set is considered to be for ACK/NACK feedback mode.

In one embodiment, the first bit block comprises up to 2 HARQ-ACK bits, and the first bit block comprises at least one HARQ-ACK bit representing NACK.

In one embodiment, the first bit block only comprises a HARQ-ACK bit representing NACK.

In one embodiment, the first node receives a first information group and a first DCI, and transmits a first bit block in a target PUCCH; the second node transmits a first information group and a first DCI, and receives a first bit block in a target PUCCH; herein, the first bit block comprises at least one HARQ-ACK bit, and resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources; the first bit block comprises up to 2 HARQ-ACK bits, and the first bit block comprises at least one HARQ-ACK bit representing NACK; there exist two PUCCH resource sets in the multiple PUCCH resource sets respectively corresponding to different HARQ-ACK feedback modes, and the different HARQ-ACK feedback modes comprise: NACK-only feedback and ACK/NACK feedback.

In one subembodiment of the above embodiment, the first DCI comprises a first field, the first field in the first DCI is used to determine the target PUCCH resource set from the multiple PUCCH resource sets, and is also used to determine the target PUCCH resource from the target PUCCH resource set.

In one subembodiment of the above embodiment, the first DCI comprises a second field and a third field, the second field in the first DCI is used to determine the target PUCCH resource set from the multiple PUCCH resource sets, and the third field in the first DCI is used to determine the target PUCCH resource from the target PUCCH resource set.

## Embodiment 12

Embodiment 12 illustrates a schematic diagram of a first field in a first DCI according to one embodiment of the present application, as shown in FIG. 12.

In embodiment 12, the first DCI comprises a first field, the first field in the first DCI is used to determine the target PUCCH resource set from the multiple PUCCH resource sets, and is also used to determine the target PUCCH resource from the target PUCCH resource set.

In one embodiment, the first field in the first DCI is used to indicate the target PUCCH resource set from multiple PUCCH resource sets, and is also used to indicate the target PUCCH resource set from the target PUCCH resource set.

In one embodiment, the first field in the first DCI is used to indicate an index of the target PUCCH resource set in the multiple PUCCH resource sets, as well as an index of the target PUCCH resource in the target PUCCH resource set.

In one embodiment, a value of the first field in the first DCI is mapped to the target PUCCH resource set in multiple PUCCH resource sets through a table looking up method, and the value of the first field in the first DCI is mapped to the target PUCCH resource in the target PUCCH resource set through a table looking up method.

In one subembodiment of the above embodiment, the value of the first field in the first DCI is mapped to both the target PUCCH resource set in multiple PUCCH resource sets and also mapped to the target PUCCH resources in the target PUCCH resource set in the same table.

In one subembodiment of the above embodiment, the value of the first field in the first DCI are respectively mapped to the target PUCCH resource set in the multiple PUCCH resource sets and the target PUCCH resource in the target PUCCH resource set in two different tables.

In one embodiment, the first DCI comprises a first field, and the first field in the first DCI is used to indicate the target PUCCH resource set from the multiple PUCCH resource sets; when a number of PUCCH resource(s) comprised in the target PUCCH resource set is not greater than 8: the first field in the first DCI is used to indicate an index of the target PUCCH resource in the target PUCCH resource set; when a number of PUCCH resource(s) comprised in the target PUCCH resource set is greater than 8: the first node determines an index $r_{\text{PUCCH}}$ of the target PUCCH resource in the target PUCCH resource set as follows:

$$r_{\text{PUCCH}} = \begin{cases} \left\lfloor \dfrac{n_{\text{CCE},p} \cdot \left\lceil R_{\text{PUCCH}}/8 \right\rceil}{N_{\text{CCE},p}} \right\rfloor + \Delta_{\text{PRI}} \cdot \left\lceil \dfrac{R_{\text{PUCCH}}}{8} \right\rceil & \text{if} \quad \Delta_{\text{PRI}} < R_{\text{PUCCH}} \bmod 8 \\[4mm] \left\lfloor \dfrac{n_{\text{CCE},p} \cdot \left\lfloor R_{\text{PUCCH}}/8 \right\rfloor}{N_{\text{CCE},p}} \right\rfloor + \Delta_{\text{PRI}} \cdot \left\lfloor \dfrac{R_{\text{PUCCH}}}{8} \right\rfloor + R_{\text{PUCCH}} \bmod 8 & \text{if} \quad \Delta_{\text{PRI}} \geq R_{\text{PUCCH}} \bmod 8 \end{cases},$$

herein, the $R_{\text{PUCCH}}$ is equal to a number of PUCCH resource(s) comprised in the target PUCCH resource set, the $N_{\text{CCE},p}$

is a number of CCE(s) (Control channel element(s)) in a CORESET (Control resource set) used for a PDCCH (Physical downlink control channel) reception of the first DCI, the $n_{CCE,p}$ is an index of a first one of CCE(s) used for a PDCCH reception of the first DCI, and the $\Delta_{PRI}$ is a value of the first field in the first DCI.

In one embodiment, the first field is a PUCCH resource indicator field.

In one embodiment, the first field is a field other than a PUCCH resource indicator field.

In one embodiment, the first field comprises at least one bit.

In one embodiment, the first field comprises 1 bit.

In one embodiment, the first field comprises 2 bits.

In one embodiment, the first field comprises 3 bits.

In one embodiment, the target PUCCH adopts either PUCCH format 0 or PUCCH format 1.

### Embodiment 13

Embodiment 13 illustrates a schematic diagram of a second field and a third field in a first DCI according to one embodiment of the present application, as shown in FIG. 13.

In embodiment 13, the first DCI comprises a second field and a third field, the second field in the first DCI is used to determine the target PUCCH resource set from the multiple PUCCH resource sets, and the third field in the first DCI is used to determine the target PUCCH resource from the target PUCCH resource set.

In one embodiment, the second field is a PUCCH resource set indicator field.

In one embodiment, a name of the second field comprises PUCCH, resource, and set.

In one embodiment, a name of the second domain comprises PUCCH, resource, set, and indicator.

In one embodiment, the second field is a field other than a PUCCH resource indicator field.

In one embodiment, the second field in the first DCI is used to indicate an index of the target PUCCH resource set in the multiple PUCCH resource sets.

In one embodiment, the second field in the first DCI is used to explicitly indicate an index of the target PUCCH resource set in the multiple PUCCH resource sets.

In one embodiment, a value of the second field in the first DCI is equal to an index of the target PUCCH resource set in the multiple PUCCH resource sets.

In one embodiment, the multiple PUCCH resource sets comprise a first PUCCH resource set and a second PUCCH resource set, with the second field comprising one bit; when a value of the second field in the first DCI is equal to 0, the target PUCCH resource set is the first PUCCH resource set; when a value of the second field in the first DCI is equal to 1, the target PUCCH resource set is the second PUCCH resource set.

In one subembodiment of the above embodiment, the third field is a PUCCH resource indicator field.

In one subembodiment of the above embodiment, the first PUCCH resource set is a PUCCH resource set for NACK-only feedback, and the second PUCCH resource set is a PUCCH resource set for ACK/NACK feedback.

In one subembodiment of the above embodiment, the second PUCCH resource set is a PUCCH resource set for NACK-only feedback, and the first PUCCH resource set is a PUCCH resource set for ACK/NACK feedback.

In one embodiment, the third field in the first DCI is used to indicate an index of the target PUCCH resource in the target PUCCH resource set.

In one embodiment, a value of the third field in the first DCI is mapped to the target PUCCH resources in the target PUCCH resource set by looking up a table.

In one embodiment, when a number of PUCCH resources comprised in the target PUCCH resource set is not greater than 8: the third field in the first DCI is used to indicate an index of the target PUCCH resource in the target PUCCH resource set; when a number of PUCCH resources comprised in the target PUCCH resource set is greater than 8: the first node determines an index of the target PUCCH resource in the target PUCCH resource set as follows: $r_{PUCCH}$

$$r_{PUCCH} = \begin{cases} \left\lfloor \dfrac{n_{CCE,p} \cdot \left\lceil R_{PUCCH}/8 \right\rceil}{N_{CCE,p}} \right\rfloor + \Delta_{PRI} \cdot \left\lceil \dfrac{R_{PUCCH}}{8} \right\rceil & \text{if} \quad \Delta_{PRI} < R_{PUCCH} \bmod 8 \\ \left\lfloor \dfrac{n_{CCE,p} \cdot \left\lfloor R_{PUCCH}/8 \right\rfloor}{N_{CCE,p}} \right\rfloor + \Delta_{PRI} \cdot \left\lfloor \dfrac{R_{PUCCH}}{8} \right\rfloor + R_{PUCCH} \bmod 8 & \text{if} \quad \Delta_{PRI} \geq R_{PUCCH} \bmod 8 \end{cases},$$

herein, the $R_{PUCCH}$ is equal to a number of PUCCH resource(s) comprised in the target PUCCH resource set, the $N_{CCE,p}$ is a number of CCE(s) in a CORESET used for a PDCCH reception of the first DCI, the $n_{CCE,p}$ is an index of a first one of CCE(s) used for a PDCCH reception of the first DCI, and the $\Delta_{PRI}$ is a value of the third field in the first DCI.

In one embodiment, the third field is a PUCCH resource indicator field.

In one embodiment, the third field comprises 1 bit.

In one embodiment, the third field comprises 2 bits.

In one embodiment, the third field comprises 3 bits.

**Embodiment 14**

Embodiment 14 illustrates a structural block diagram of a processor in a first node, as shown in FIG. 14. In FIG. 14, a processor 1400 in a first node comprises a first receiver 1401 and a first transmitter 1402.

In one embodiment, the first node 1400 is a UE.

In one embodiment, the first node 1400 is a relay node.

In one embodiment, the first node 1400 is a vehicle-mounted communication device.

In one embodiment, the first node 1400 is a UE that supports V2X communications.

In one embodiment, the first node 1400 is a relay node that supports V2X communications.

In one embodiment, the first receiver 1401 comprises at least one of the antenna 452, the receiver 454, the multi-antenna receiving processor 458, the receiving processor 456, the controller/ processor 459, the memory 460 or the data source 467 in FIG. 4 of the present application.

In one embodiment, the first receiver 1401 comprises at least the first five of the antenna 452, the receiver 454, the multi-antenna receiving processor 458, the receiving processor 456, the controller/ processor 459, the memory 460 and the data source 467 in FIG. 4 of the present application.

In one embodiment, the first receiver 1401 comprises at least the first four of the antenna 452, the receiver 454, the multi-antenna receiving processor 458, the receiving processor 456, the controller/ processor 459, the memory 460 and the data source 467 in FIG. 4 of the present application.

In one embodiment, the first receiver 1401 comprises at least the first three of the antenna 452, the receiver 454, the multi-antenna receiving processor 458, the receiving processor 456, the controller/ processor 459, the memory 460 and the data source 467 in FIG. 4 of the present application.

In one embodiment, the first receiver 1401 comprises at least the first two of the antenna 452, the receiver 454, the multi-antenna receiving processor 458, the receiving processor 456, the controller/ processor 459, the memory 460 and the data source 467 in FIG. 4 of the present application.

In one embodiment, the first transmitter 1402 comprises at least one of the antenna 452, the transmitter 454, the multi-antenna transmitting processor 457, the transmitting processor 468, the controller/ processor 459, the memory 460, or the data source 467 in FIG 4 of the present application.

In one embodiment, the first transmitter 1402 comprises at least first five of the antenna 452, the transmitter 454, the multi-antenna transmitting processor 457, the transmitting processor 468, the controller/ processor 459, the memory 460, and the data source 467 in FIG 4 of the present application.

In one embodiment, the first transmitter 1402 comprises at least first four of the antenna 452, the transmitter 454, the multi-antenna transmitting processor 457, the transmitting processor 468, the controller/ processor 459, the memory 460, and the data source 467 in FIG 4 of the present application.

In one embodiment, the first transmitter 1402 comprises at least first three of the antenna 452, the transmitter 454, the multi-antenna transmitting processor 457, the transmitting processor 468, the controller/ processor 459, the memory 460, and the data source 467 in FIG 4 of the present application.

In one embodiment, the first transmitter 1402 comprises at least first two of the antenna 452, the transmitter 454, the multi-antenna transmitting processor 457, the transmitting processor 468, the controller/ processor 459, the memory 460, and the data source 467 in FIG 4 of the present application.

In one embodiment, the first receiver 1401 receives a target PDSCH and a first signaling; the first transmitter 1402 transmits a first PUSCH in a first radio resource pool; herein, the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

In one embodiment, the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first node aborts transmitting a HARQ-ACK bit in the first radio resource pool.

In one embodiment, when the value of the first field in the first signaling is equal to 1 and the HARQ process corresponding to the target PDSCH is a HARQ process of the second type: the first radio resource pool is used to transmit at least one HARQ-ACK bit, and any HARQ-ACK bit in the at least one HARQ-ACK bit represents a NACK.

In one embodiment, when the value of the first field in the first signaling is equal to 1: the first radio resource pool is used to transmit at least one HARQ-ACK bit, and the at least one HARQ-ACK bit comprises a HARQ-ACK bit for the target PDSCH.

In one embodiment, when the HARQ process corresponding to the target PDSCH is a HARQ process of the first type: the first radio resource pool is used to transmit at least one HARQ-ACK bit, and the at least one HARQ-ACK bit comprises a HARQ-ACK bit for the target PDSCH.

In one embodiment, a HARQ process of the first type is a HARQ process with enabled HARQ feedback, and a HARQ process of the second type is a HARQ process with disabled HARQ feedback.

In one embodiment, a first PUCCH resource is associated with the target PDSCH, and the first PUCCH resource overlaps with resources occupied by the first PUSCH in time domain.

In one embodiment, the first receiver 1401 receives a target PDSCH and a first signaling; the first transmitter 1402 transmits a first PUSCH in a first radio resource pool; herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, the first node aborts transmitting a HARQ-ACK bit for the target PDSCH in the first radio resource pool.

In one embodiment, the first signaling comprises a second field, and the second field comprises one bit; the first condition is: a value of the second field in the first signaling is equal to 0.

In one embodiment, the first radio resource pool is used to transmit a Type-2 HARQ-ACK codebook or is not used to transmit a Type-2 HARQ-ACK codebook; the first condition is: the first radio resource pool is not used to transmit a Type-2 HARQ-ACK codebook.

In one embodiment, when the first radio resource pool is used to transmit a HARQ-ACK bit for the target PDSCH, a HARQ-ACK bit for the target PDSCH belongs to a Type-1 HARQ-ACK codebook.

In one embodiment, when the value of the first field in the first signaling is equal to 0 and the first condition is met: a number of HARQ-ACK bit(s) transmitted in the first radio resource pool is equal to 1; when the value of the first field in the first signaling is equal to 1: a number of HARQ-ACK bit(s) transmitted in the first radio resource pool is greater than 1.

In one embodiment, a first PUCCH is associated with the target PDSCH, and there exists an overlapping between the first PUCCH and the first PUSCH in time domain.

In one embodiment, the first receiver 1401 receives a first information group and a first DCI; the first transmitter 1402 transmits a first bit block in a target PUCCH, and the first bit block comprises at least one HARQ-ACK bit; herein, resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

In one embodiment, the first DCI comprises a first field, the first field in the first DCI is used to determine the target PUCCH resource set from the multiple PUCCH resource sets, and is also used to determine the target PUCCH resource from the target PUCCH resource set.

In one embodiment, the first DCI comprises a second field and a third field, the second field in the first DCI is used to determine the target PUCCH resource set from the multiple PUCCH resource sets, and the third field in the first DCI is used to determine the target PUCCH resource from the target PUCCH resource set.

In one embodiment, there exist two PUCCH resource sets in the multiple PUCCH resource sets respectively corresponding to different HARQ-ACK feedback modes, and the different HARQ-ACK feedback modes comprise: NACK-only feedback and ACK/NACK feedback.

In one embodiment, the first bit block comprises up to 2 HARQ-ACK bits, and the first bit block comprises at least one HARQ-ACK bit representing NACK.

In one embodiment, the first receiver 1401 receives a first information group and a first DCI; the first transmitter 1402 transmits a first bit block in a target PUCCH, and the first bit block comprises at least one HARQ-ACK bit; herein, the target PUCCH adopts either PUCCH format 0 or PUCCH format 1, and resources occupied by the target PUCCH belong to target PUCCH resources; the first DCI is used to determine a target PUCCH resource set from two PUCCH resource sets, and is also used to determine the target PUCCH resource from the target PUCCH resource set; the first information group is used to determine the two PUCCH resource sets, any of the two PUCCH resource sets comprises multiple PUCCH resources, and the two PUCCH resource sets are respectively PUCCH resource sets for NACK-only feedback and ACK/NACK feedback.

In one subembodiment of the above embodiment, the first DCI comprises a first field, the first field is a PUCCH resource indicator field, the first field in the first DCI is used to determine the target PUCCH resource set from the multiple PUCCH resource sets, and is also used to determine the target PUCCH resource from the target PUCCH resource set.

In one subembodiment of the above embodiment, the first DCI comprises a second field and a third field, a name of the second field comprises at least one of PUCCH, resource, or set, the third field is a PUCCH resource indicator field, the second field in the first DCI is used to determine the target PUCCH resource set from the multiple PUCCH resource sets, and the third field in the first DCI is used to determine the target PUCCH resource from the target PUCCH resource set.

In one embodiment, the first receiver 1401 receives a first signaling, and the first signaling comprises a first field; the first transmitter 1402 transmits a first PUSCH; herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion.

In one embodiment, when the value of the first field in the first signaling is not equal to 4, or when the first node receives a PDCCH for a DCI format of the first type in the target monitoring occasion set, or when the first node has HARQ-ACK information received in response to an SPS PDSCH to be multiplexed in the first PUSCH, the first PUSCH carries HARQ-ACK information.

In one embodiment, whether the first PUSCH carries HARQ-ACK information is related to whether the first node receives a PDCCH for a DCI format of the first type in the target monitoring occasion set.

In one embodiment, the expression that a PDSCH reception of the first type is a PDSCH reception other than a PDSCH reception associated with disabled HARQ-ACK information comprises: a PDSCH reception of the first type is a PDSCH reception other than a PDSCH reception that only provides TB(s) for a HARQ process associated with disabled HARQ-ACK information.

In one embodiment, the first field is a Downlink Assignment Index (DAI) field.

In one embodiment, the first node receives a first signaling, and the first signaling comprises a first field; transmits a first PUSCH; herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion; the first field is a DAI field.

In one subembodiment of the above embodiment, the second node transmits the first signaling, and receives the first PUSCH.

In one subembodiment of the above embodiment, whether the first PUSCH carries HARQ-ACK information is related to whether the first node receives a PDCCH for a DCI format of the first type in the target monitoring occasion set.

In one embodiment, the first node receives a first signaling, and the first signaling comprises a first field; transmits a first PUSCH; herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format scheduling PDSCH reception(s) of a first type, or having associated HARQ-ACK information and not scheduling a PDSCH reception, a PDSCH reception of the first type is PDSCH reception other than PDSCH reception that only provides a TB for HARQ process associated with disabled HARQ-ACK information; the target monitoring occasion set comprises at least one monitoring occasion; the first field is a DAI field.

In one subembodiment of the above embodiment, the second node transmits the first signaling, and receives the first PUSCH.

In one subembodiment of the above embodiment, whether the first PUSCH carries HARQ-ACK information is related to whether the first node receives a PDCCH for a DCI format of the first type in the target monitoring occasion set.

## Embodiment 15

Embodiment 15 illustrates a structural block diagram of a processor in a second node, as shown in FIG. 15. In FIG. 15, a processor 1500 in the second node comprises a second transmitter 1501 and a second receiver 1502.

In one embodiment, the second node 1500 is a UE.

In one embodiment, the second node 1500 is a base station.

In one embodiment, the second node 1500 is a relay node.

In one embodiment, the second node 1500 is a vehicle-mounted communication device.

In one embodiment, the second node 1500 is a UE supporting V2X communications.

In one embodiment, the second transmitter 1501 comprises at least one of the antenna 420, the transmitter 418, the multi-antenna transmitting processor 471, the transmitting processor 416, the controller/ processor 475 or the memory 476 in FIG. 4 of the present application.

In one embodiment, the second transmitter 1501 comprises at least the first five of the antenna 420, the transmitter 418, the multi-antenna transmitting processor 471, the transmitting processor 416, the controller/ processor 475 and the memory 476 in FIG. 4 of the present application.

In one embodiment, the second transmitter 1501 comprises at least the first four of the antenna 420, the transmitter 418, the multi-antenna transmitting processor 471, the transmitting processor 416, the controller/ processor 475 and the memory 476 in FIG. 4 of the present application.

In one embodiment, the second transmitter 1501 comprises at least the first three of the antenna 420, the transmitter 418, the multi-antenna transmitting processor 471, the transmitting processor 416, the controller/ processor 475 and the memory 476 in FIG. 4 of the present application.

In one embodiment, the second transmitter 1501 comprises at least the first two of the antenna 420, the transmitter 418, the multi-antenna transmitting processor 471, the transmitting processor 416, the controller/ processor 475 and the memory 476 in FIG. 4 of the present application.

In one embodiment, the second receiver 1502 comprises at least one of the antenna 420, the receiver 418, the multi-antenna receiving processor 472, the receiving processor 470, the controller/ processor 475 or the memory 476 in FIG. 4 of the present application.

In one embodiment, the second receiver 1502 comprises at least first five of the antenna 420, the receiver 418, the multi-antenna receiving processor 472, the receiving processor 470, the controller/ processor 475 and the memory 476 in FIG. 4 of the present application.

In one embodiment, the second receiver 1502 comprises at least first four of the antenna 420, the receiver 418, the multi-antenna receiving processor 472, the receiving processor 470, the controller/ processor 475 and the memory 476 in FIG. 4 of the present application.

In one embodiment, the second receiver 1502 comprises at least first three of the antenna 420, the receiver 418, the multi-antenna receiving processor 472, the receiving processor 470, the controller/ processor 475 and the memory 476 in FIG. 4 of the present application.

In one embodiment, the second receiver 1502 comprises at least first two of the antenna 420, the receiver 418, the multi-antenna receiving processor 472, the receiving processor 470, the controller/ processor 475 and the memory 476 in FIG. 4 of the present application.

In one embodiment, the second transmitter 1501 transmits a target PDSCH and a first signaling; the second receiver 1502 receives a first PUSCH in a first radio resource pool; herein, the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

In one embodiment, the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first radio resource pool is not used to transmit a HARQ-ACK bit.

In one embodiment, when the value of the first field in the first signaling is equal to 1 and the HARQ process corresponding to the target PDSCH is a HARQ process of the second type: the first radio resource pool is used to transmit at least one HARQ-ACK bit, and any HARQ-ACK bit in the at least one HARQ-ACK bit represents a NACK.

In one embodiment, when the value of the first field in the first signaling is equal to 1: the first radio resource pool is used to transmit at least one HARQ-ACK bit, and the at least one HARQ-ACK bit comprises a HARQ-ACK bit for the target PDSCH.

In one embodiment, when the HARQ process corresponding to the target PDSCH is a HARQ process of the first type: the first radio resource pool is used to transmit at least one HARQ-ACK bit, and the at least one HARQ-ACK bit comprises a HARQ-ACK bit for the target PDSCH.

In one embodiment, a HARQ process of the first type is a HARQ process with enabled HARQ feedback, and a HARQ process of the second type is a HARQ process with disabled HARQ feedback.

In one embodiment, a first PUCCH resource is associated with the target PDSCH, and the first PUCCH resource overlaps with resources occupied by the first PUSCH in time domain.

In one embodiment, the second transmitter 1501 transmits a target PDSCH and a first signaling; the second receiver 1502 receives a first PUSCH in a first radio resource pool; herein, the first signaling is used to determine the first radio resource pool; the first signaling comprises a first field, the first field comprises 1 bit, and a value of the first field in the first signaling is used to determine whether the first radio resource pool is used to transmit HARQ-ACK bit(s) for the target PDSCH; when a value of the first field in the first signaling is equal to 1 or a first condition is satisfied, the first radio resource pool is used to transmit at least one HARQ-ACK bit, and the at least one HARQ-ACK bit comprises a HARQ-ACK bit for the target PDSCH; when a value of the first field in the first signaling is equal to 0 and a first condition is not satisfied, the first radio resource pool is not used to transmit a HARQ-ACK bit for the target PDSCH.

In one embodiment, the first signaling comprises a second field, and the second field comprises one bit; the first condition is: a value of the second field in the first signaling is equal to 0.

In one embodiment, the first condition is: the first radio resource pool is not used to transmit a Type-2 HARQ-ACK codebook.

In one embodiment, when the first radio resource pool is used to transmit a HARQ-ACK bit for the target PDSCH, a HARQ-ACK bit for the target PDSCH belongs to a Type-1 HARQ-ACK codebook.

In one embodiment, when the value of the first field in the first signaling is equal to 0 and the first condition is met: a number of HARQ-ACK bit(s) transmitted in the first radio resource pool is equal to 1; when the value of the first field in the first signaling is equal to 1: a number of HARQ-ACK bit(s) transmitted in the first radio resource pool is greater than 1.

In one embodiment, a first PUCCH is associated with the target PDSCH, and there exists an overlapping between the first PUCCH and the first PUSCH in time domain.

In one embodiment, the second transmitter 1501 transmits a first information group and a first DCI; the second receiver 1502 receives a first bit block in a target PUCCH, and the first bit block comprises at least one HARQ-ACK bit; herein, resources occupied by the target PUCCH belong to target PUCCH resources; the first DCI is used to determine a target PUCCH resource set from multiple PUCCH resource sets, and is also used to determine the target PUCCH resource set from the target PUCCH resource set; the first information set is used to determine the multiple PUCCH resource sets, and any PUCCH resource set in the multiple PUCCH resource sets comprises multiple PUCCH resources.

In one embodiment, the first DCI comprises a first field, the first field in the first DCI is used to determine the target PUCCH resource set from the multiple PUCCH resource sets, and is also used to determine the target PUCCH resource from the target PUCCH resource set.

In one embodiment, the first DCI comprises a second field and a third field, the second field in the first DCI is used to determine the target PUCCH resource set from the multiple PUCCH resource sets, and the third field in the first DCI is used to determine the target PUCCH resource from the target PUCCH resource set.

In one embodiment, there exist two PUCCH resource sets in the multiple PUCCH resource sets respectively corresponding to different HARQ-ACK feedback modes, and the different HARQ-ACK feedback modes comprise: NACK-only feedback and ACK/NACK feedback.

In one embodiment, the first bit block comprises up to 2 HARQ-ACK bits, and the first bit block comprises at least one HARQ-ACK bit representing NACK.

In one embodiment, the second transmitter 1501 transmits a first signaling, and the first signaling comprises a first field; the second receiver 1502 receives a first PUSCH; herein, the first signaling is used to schedule the first PUSCH; whether the first PUSCH carries HARQ-ACK information is related to a value of the first field in the first signaling; when the value of the first field in the first signaling is equal to 4 and the first node has not received any PDCCH for a DCI of a first type within a target monitoring occasion set and the first node does not have HARQ-ACK information in response to an SPS PDSCH reception to multiplex in the first PUSCH, the first PUSCH does not carry HARQ-ACK information; a DCI format of the first type is a DCI format that schedules PDSCH reception(s) of a first type, or has associated HARQ-ACK information and does not schedule a PDSCH reception, and a PDSCH reception of the first type is a PDSCH reception other than a PDSCH reception associated with disabled HARQ-ACK information; the target monitoring occasion set comprises at least one monitoring occasion.

In one embodiment, when the value of the first field in the first signaling is not equal to 4, or when the first node receives a PDCCH for a DCI format of the first type in the target monitoring occasion set, or when the first node has HARQ-ACK information received in response to an SPS PDSCH to be multiplexed in the first PUSCH, the first PUSCH carries HARQ-ACK information.

In one embodiment, whether the first PUSCH carries HARQ-ACK information is related to whether the first node receives a PDCCH for a DCI format of the first type in the target monitoring occasion set.

In one embodiment, the expression that a PDSCH reception of the first type is a PDSCH reception other than a PDSCH reception associated with disabled HARQ-ACK information comprises: a PDSCH reception of the first type is a PDSCH reception other than a PDSCH reception that only provides TB(s) for a HARQ process associated with disabled HARQ-ACK information.

In one embodiment, the first field is a Downlink Assignment Index (DAI) field.

The ordinary skill in the art may understand that all or part of steps in the above method may be implemented by instructing related hardware through a program. The program may be stored in a computer readable storage medium, for example Read-Only Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The first node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts and other wireless communication devices. The second node in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts and other wireless communication devices. The UE or terminal in the present application includes but is not limited to mobile phones, tablet computers, notebooks, network cards, low-consumption equipment, enhanced MTC (eMTC) terminals, NB-IOT terminals, vehicle-mounted communication equipment, aircrafts, diminutive airplanes, unmanned aerial vehicles, telecontrolled aircrafts, etc. The base station or network side equipment in the present application includes but is not limited to macro-cellular base stations, micro-cellular base stations, home base stations, relay base station, eNB, gNB, Transmitter Receiver Point (TRP), GNSS, relay satellites, satellite base stations, space base stations, test device, test equipment, test instrument and other radio communication equipment.

It will be appreciated by those skilled in the art that this disclosure can be implemented in other designated forms without departing from the core features or fundamental characters thereof. The currently disclosed embodiments, in any case, are therefore to be regarded only in an illustrative, rather than a restrictive sense. The scope of invention shall be determined by the claims attached, rather than according to previous descriptions, and all changes made with equivalent meaning are intended to be included therein.

**Claims**

1. A first node for wireless communications, comprising:

   a first receiver, receiving a target PDSCH and a first signaling; and
   a first transmitter, transmitting a first PUSCH in a first radio resource pool;
   wherein the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

2. The first node according to claim 1, wherein the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first node does not transmit a HARQ-ACK bit in the first radio resource pool.

3. The first node according to claim 1 or 2, wherein when the value of the first field in the first signaling is equal to 1 and the HARQ process corresponding to the target PDSCH is a HARQ process of the second type: the first radio resource pool is used to transmit at least one HARQ-ACK bit, and any HARQ-ACK bit in the at least one HARQ-ACK bit represents a NACK.

4. The first node according to claim 1 or 2, wherein when the value of the first field in the first signaling is equal to 1: the first radio resource pool is used to transmit at least one HARQ-ACK bit, and the at least one HARQ-ACK bit comprises HARQ-ACK bit(s) for the target PDSCH.

5. The first node according to any of claims 1-4, wherein when the HARQ process corresponding to the target PDSCH is a HARQ process of the first type: the first radio resource pool is used to transmit at least one HARQ-ACK bit, and the at least one HARQ-ACK bit comprises HARQ-ACK bit(s) for the target PDSCH.

6. The first node according to any of claims 1-5, wherein a HARQ process of the first type is a HARQ process with enabled HARQ-ACK feedback, and the second-type HARQ process is a HARQ process with disabled HARQ-ACK feedback.

7. The first node according to any of claims 1-6, wherein a first PUCCH resource is associated with the target PDSCH, and the first PUCCH resource overlaps with resources occupied by the first PUSCH in time domain.

8. The first node according to any of claims 1-7, wherein the first field is a DAI (Downlink Assignment Index) field.

9. A second node for wireless communications, comprising:

   a second transmitter, transmitting a target PDSCH and a first signaling; and
   a second receiver, receiving a first PUSCH in a first radio resource pool;
   wherein the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

10. The second node according to claim 9, wherein the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first radio resource pool is not used to transmit a HARQ-ACK bit.

11. The second node according to claim 9 or 10, wherein when the value of the first field in the first signaling is equal to 1 and the HARQ process corresponding to the target PDSCH is a HARQ process of the second type: the first radio resource pool is used to transmit at least one HARQ-ACK bit, and any HARQ-ACK bit in the at least one HARQ-ACK bit represents a NACK.

12. The second node according to claim 9 or 10, wherein when the value of the first field in the first signaling is equal to 1: the first radio resource pool is used to transmit at least one HARQ-ACK bit, and the at least one HARQ-ACK bit comprises HARQ-ACK bit(s) for the target PDSCH.

13. The second node according to any of claims 9-12, wherein when the HARQ process corresponding to the target PDSCH is a HARQ process of the first type: the first radio resource pool is used to transmit at least one HARQ-ACK bit, and the at least one HARQ-ACK bit comprises HARQ-ACK bit(s) for the target PDSCH.

14. The second node according to any of claims 9-13, wherein a HARQ process of the first type is a HARQ process with enabled HARQ-ACK feedback, and the second-type HARQ process is a HARQ process with disabled HARQ-ACK feedback.

15. The second node according to any of claims 9-14, wherein a first PUCCH resource is associated with the target PDSCH, and the first PUCCH resource overlaps with resources occupied by the first PUSCH in time domain.

16. The second node according to any of claims 9-15, wherein the first field is a DAI (Downlink Assignment Index) field.

17. A method in a first node for wireless communications, comprising:

   receiving a target PDSCH and a first signaling; and
   transmitting a first PUSCH in a first radio resource pool;
   wherein the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

18. The method in a first node according to claim 17, wherein the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first node does not transmit a HARQ-ACK bit in the first radio resource pool.

19. The method in a first node according to claim 17 or 18, wherein when the value of the first field in the first signaling is equal to 1 and the HARQ process corresponding to the target PDSCH is a HARQ process of the second type: the first radio resource pool is used to transmit at least one HARQ-ACK bit, and any HARQ-ACK bit in the at least one HARQ-ACK bit represents a NACK.

20. The method in a first node according to claim 17 or 18, wherein when the value of the first field in the first signaling is equal to 1: the first radio resource pool is used to transmit at least one HARQ-ACK bit, and the at least one HARQ-ACK bit comprises HARQ-ACK bit(s) for the target PDSCH.

21. The method in a first node according to any of claims 17-20, wherein when the HARQ process corresponding to the target PDSCH is a HARQ process of the first type: the first radio resource pool is used to transmit at least one HARQ-ACK bit, and the at least one HARQ-ACK bit comprises HARQ-ACK bit(s) for the target PDSCH.

22. The method in a first node according to any of claims 17-21, wherein a HARQ process of the first type is a HARQ process with enabled HARQ-ACK feedback, and the second-type HARQ process is a HARQ process with disabled HARQ-ACK feedback.

23. The method in a first node according to any of claims 17-22, wherein a first PUCCH resource is associated with the target PDSCH, and the first PUCCH resource overlaps with resources occupied by the first PUSCH in time domain.

24. The method in a first node according to any of claims 17-23, wherein the first field is a DAI (Downlink Assignment Index) field.

25. A method in a second node for wireless communications, comprising:

   transmitting a target PDSCH and a first signaling; and
   receiving a first PUSCH in a first radio resource pool;
   wherein the first signaling is used to determine the first radio resource pool; a HARQ process corresponding to the target PDSCH is either a HARQ process of a first type or a HARQ process of a second type, and a HARQ process of the first type is different from a HARQ process of the second type; the first signaling comprises a first field, and a value of the first field in the first signaling and the HARQ process corresponding to the target PDSCH are used to determine whether the first radio resource pool is used to transmit HARQ-ACK bit(s).

26. The method in a second node according to claim 25, wherein the first field comprises one bit; when the value of the first field in the first signaling is equal to 1 or the HARQ process corresponding to the target PDSCH is a HARQ process of the first type, the first radio resource pool is used to transmit at least one HARQ-ACK bit; when the value of the first field in the first signaling is equal to 0 and the HARQ process corresponding to the target PDSCH is a HARQ process of the second type, the first radio resource pool is not used to transmit a HARQ-ACK bit.

27. The method in a second node according to claim 25 or 26, wherein when the value of the first field in the first signaling is equal to 1 and the HARQ process corresponding to the target PDSCH is a HARQ process of the second type: the first radio resource pool is used to transmit at least one HARQ-ACK bit, and any HARQ-ACK bit in the at least one HARQ-ACK bit represents a NACK.

28. The method in a second node according to claim 25 or 26, wherein when the value of the first field in the first signaling is equal to 1: the first radio resource pool is used to transmit at least one HARQ-ACK bit, and the at least one HARQ-ACK bit comprises HARQ-ACK bit(s) for the target PDSCH.

29. The method in a second node according to any of claims 25-28, wherein when the HARQ process corresponding to the target PDSCH is a HARQ process of the first type: the first radio resource pool is used to transmit at least one HARQ-ACK bit, and the at least one HARQ-ACK bit comprises HARQ-ACK bit(s) for the target PDSCH.

30. The method in a second node according to any of claims 25-29, wherein a HARQ process of the first type is a HARQ process with enabled HARQ-ACK feedback, and the second-type HARQ process is a HARQ process with disabled HARQ-ACK feedback.

31. The method in a second node according to any of claims 25-30, wherein a first PUCCH resource is associated with the target PDSCH, and the first PUCCH resource overlaps with resources occupied by the first PUSCH in time domain.

32. The method in a second node according to any of claims 25-31, wherein the first field is a DAI (Downlink Assignment Index) field.

**100**

First node

Receiving target PDSCH and first signaling — 101

Transmitting first PUSCH in first radio resource pool — 102

FIG. 1

EPS 200

NR-RAN
202

HSS — 220

UE — 201

NR Node B — 203

Other NR Nodes B — 204

MME/AMF/ UPF — 211

Other MMEs/AMFs/UPFs — 214

S-GW — 212

P-GW — 213

Internet Service — 230

5G-CN/EPC
210

FIG.2

## Control Plane
## 300

L3

| RRC | ⌇ 306 |

305 ⌇

L2

| PDCP | ⌇ 304 |

| RLC | ⌇ 303 |

| MAC | ⌇ 302 |

L1

| PHY | ⌇ 301 |

## User Plane
## 350

| SDAP | ⌇ 356 |

355 ⌇

L2

| PDCP | ⌇ 354 |

| RLC | ⌇ 353 |

| MAC | ⌇ 352 |

L1

| PHY | ⌇ 351 |

FIG. 3

FIG. 4

```
┌─────────────────────┐                              ┌─────────────────────┐
│   U2.Second node    │                              │   U1.First node     │
└──────────┬──────────┘                              └──────────┬──────────┘
┌──────────┴──────────┐                                         │
│ S521.transmitting target │                                    │
│        PDSCH        │                                         │
└──────────┬──────────┘                                         │
           │──────────────target PDSCH──────────────►           │
           │                              ┌──────────┴──────────┐│
           │                              │ S511.receiving target│
           │                              │        PDSCH        ││
           │                              └──────────┬──────────┘│
┌──────────┴──────────┐                              │
│ S522.transmitting first │                          │
│      signaling      │                              │
└──────────┬──────────┘                              │
           │──────────────first signaling────────────►           │
           │                              ┌──────────┴──────────┐│
           │                              │ S512.receiving first ││
           │                              │      signaling      ││
           │                              └──────────┬──────────┘│
           │                              ┌──────────┴──────────┐│
           │                              │ S513.transmitting first│
           │                              │ PUSCH in first radio resource│
           │                              │        pool         ││
           │                              └──────────┬──────────┘│
           │◄──────────────first PUSCH────────────────           │
┌──────────┴──────────┐                              │
│ S523.receiving first PUSCH in │                    │
│   first radio resource pool   │                    │
└──────────┬──────────┘                              │
        ┌──┴──┐                                    ┌──┴──┐
        │ End │                                    │ End │
        └─────┘                                    └─────┘
```

FIG. 5

```
Value of first field in first                                Value of first field in first
signaling is equal to 1 or                                   signaling is equal to 0 or
HARQ process corresponding          ◇                        HARQ process corresponding
to target PDSCH is HARQ      S61: Value of first field in     to target PDSCH is HARQ
process of first type        first signaling, and HARQ       process of second type
          │                  process corresponding to              │
          │                    target PDSCH?                        │
          ▼                                                         ▼
┌─────────────────────┐                              ┌─────────────────────┐
│ S62. first radio resource │                        │ S63. aborting transmitting │
│ pool is used to transmit at │                      │ HARQ-ACK bit in first │
│ least one HARQ-ACK bit │                           │  radio resource pool  │
└─────────────────────┘                              └─────────────────────┘
```

FIG. 6

When value of first field in first signaling is equal to 0 and HARQ process corresponding to target PDSCH is HARQ process of first type ——— Number of HARQ-ACK bit(s) transmitted in first radio resource pool is equal to 1

When value of first field in the first signaling is equal to 1 ——— Number of HARQ-ACK bit(s) transmitted in first radio resource pool is greater than 1

FIG. 7

HARQ process of first type → being → HARQ process with enabled HARQ feedback

HARQ process of second type → being → HARQ process with disabled HARQ feedback

FIG. 8

Resources occupied by first PUSCH ← overlapping in time domain → First PUCCH resource — being associated with → Target PDSCH

FIG. 9

**1000**

First node

Receiving target PDSCH and
first signaling
1001

Transmitting first PUSCH in
first radio resource pool
1002

FIG. 10

**1100**

First node

Receiving first information
group
1101

Receiving first DCI
1102

Transmitting first bit block in
target PUCCH
1103

FIG. 11

| First DCI | comprising | First field | being used to determine target PUCCH resource set from multiple PUCCH resource sets, and also being used to determine target PUCCH resource from the target PUCCH resource set |
|---|---|---|---|

FIG. 12

First DCI —comprising→ Second field —being used to→ determine target PUCCH resource set from multiple PUCCH resource sets

First DCI —comprising→ Third field —being used to→ determine target PUCCH resource from multiple PUCCH resource sets

FIG. 13

First node

First receiver 1401

First transmitter 1402

1400

FIG. 14

Second node

Second transmitter 1501

Second receiver 1502

1500

FIG. 15

## INTERNATIONAL SEARCH REPORT

| International application No. |
|---|
| **PCT/CN2022/118359** |

**A.    CLASSIFICATION OF SUBJECT MATTER**

H04L 1/18(2006.01)i;   H04L 5/00(2006.01)i;   H04W 72/04(2009.01)i

According to International Patent Classification (IPC) or to both national classification and IPC

**B.    FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

CNTXT; VEN; CNKI: 物理下行共享信道, 物理上行共享信道, 混合自动重传请求, 进程, 资源池, PDSCH, physical downlink shared channel, PUSCH, physical uplink shared channel, HARQ, hybrid automatic repeat request, process, resource pool

**C.    DOCUMENTS CONSIDERED TO BE RELEVANT**

| Category* | Citation of document, with indication, where appropriate, of the relevant passages | Relevant to claim No. |
|---|---|---|
| X | WO 2021168834 A1 (GUANGDONG OPPO MOBILE COMMUNICATIONS CO., LTD.) 02 September 2021 (2021-09-02) description, page 1, line 60-page 19, line 60, and figures 1-13 | 1-32 |
| A | CN 111448772 A (GUANGDONG OPPO MOBILE COMMUNICATIONS CO., LTD.) 24 July 2020 (2020-07-24) entire document | 1-32 |
| A | CN 112839379 A (BEIJING SAMSUNG TELECOM R&D CENTER et al.) 25 May 2021 (2021-05-25) entire document | 1-32 |
| A | WO 2019144822 A1 (SHANGHAI LANGBO COMMUNICATION TECHNOLOGY CO., LTD.) 01 August 2019 (2019-08-01) entire document | 1-32 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 November 2022** | **28 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/118359**

| Patent document cited in search report | | | Publication date (day/month/year) | Patent family member(s) | | | Publication date (day/month/year) |
|---|---|---|---|---|---|---|---|
| WO | 2021168834 | A1 | 02 September 2021 | None | | | |
| CN | 111448772 | A | 24 July 2020 | None | | | |
| CN | 112839379 | A | 25 May 2021 | None | | | |
| WO | 2019144822 | A1 | 01 August 2019 | US | 2020229148 | A1 | 16 July 2020 |
| | | | | CN | 110098901 | A | 06 August 2019 |

Form PCT/ISA/210 (patent family annex) (January 2015)